# EUROPEAN PATENT SPECIFICATION

(11) **EP 1 826 593 B1**
(45) Date of publication and mention of the grant of the patent: **16.07.2014**
(21) Application number: 07102890.6
(22) Date of filing: 22.02.2007
(51) Int. Cl.: G02B 26/06, G02B 27/28

(54) **Optical element and image projecting apparatus**
Optisches Element und Bildprojektor
Élément optique et appareil de projection d'images

(30) Priority: 24.02.2006 JP 2006049067
(43) Date of publication of application: 29.08.2007
(73) Proprietor: Ricoh Company, Ltd., Tokyo 143-8555 (JP)
(72) Inventor: Kiyosawa, Yoshiyuki, Miyagi (JP); Hirai, Hideaki, Yokohama-shi, Kanagawa (JP)
(74) Representative: Schwabe - Sandmair - Marx

(56) References cited:
- EP-A- 1 650 587
- JP-A- 2005 106 901
- US-A- 4 961 634
- US-B1- 6 563 582
- KIKUTA H ET AL: "ACHROMATIC QUARTER-WAVE PLATES USING THE DISPERSION OF FORM BIREFRINGENCE" APPLIED OPTICS, OSA, OPTICAL SOCIETY OF AMERICA, WASHINGTON, DC, US, vol. 36, no. 7, 1 March 1997 (1997-03-01), pages 1566-1572, XP000684848 ISSN: 0003-6935

## Description

### BACKGROUND OF THE INVENTION

### 1. Field of the Invention

The present invention relates to an optical element and an image projecting apparatus.

### 2. Description of the Related Art

An image projecting apparatus (projector) is an apparatus for projecting an image on a display surface on which an image is displayed, such as a screen. Such an image projecting apparatus widely spreads since an image with a large area can be easily projected on a display surface.

Also, recently, as an image displaying device for a large-format thin television set, image projecting apparatuses have been actively developed together with a plasma display panel (PDP), a liquid-crystal panel (LCP) and a field-emission display (FED).

For example, a rear-projection-type image projecting apparatus for projecting an image from the backside of a screen requires no large panel and has a large cavity inside it. Therefore, the rear-projection-type image projecting apparatus can be a very light and inexpensive apparatus compared to a PDP, an LCP or a FED. Also, the rear-projection-type image projecting apparatus can be a considerably thin apparatus compared to the conventional cathode-ray-tube-type image displaying apparatus.

On the other hand, as a projection-type image projecting apparatus, there can be provided an LCD-type image projecting apparatus using a transmission-type liquid-crystal element, an LCOS-type image projecting apparatus using a reflection-type liquid-crystal element, and a DMD-type image projecting apparatus using digital micro-mirrors. Herein, the image projecting apparatus using a transmission-type liquid-crystal element or a reflection-type liquid-crystal element utilizes the polarization of light emitted from a light source and includes a wave plate for modulating the polarization of light. As a wave plate for modulating the polarization of light, for example, there can be provided a wave plate for providing light which is orthogonally polarized to each other with a phase difference corresponding to 1/2 or 1/4 of the wavelength of the light. Also, in such an image projecting apparatus, white light emitted from a light source such as a high-pressure mercury lamp is frequently split into red color (R) light, green color (G) light, and blue color (B) light, and each of split color light has, for example, a wavelength width of approximately 100 nm. Therefore, when a wave plate is used which can modulate the polarization of light with a wavelength in a narrow wavelength range, the polarization of light with a wavelength outside the wavelength range cannot be effectively utilized. For this reason, a wave plate is desired which can modulate the polarization of light over a wide range of light wavelength.

For example, Japanese Patent Application Publication No. 05-027118 discloses a phase difference plate characterized in that a birefringent film with a large retardation in which the retardation of light with a wavelength of 450 nm / the retardation of light with a wavelength of 550 nm is 1.00 - 1.05 and a birefringent film with a small retardation in which the ratio is 1.05 - 1.20 are stacked on the condition that their principal axes are crossed, as a phase difference plate with a small amount of change in phase difference dependent on a wavelength and being excellent in the uniformity of the phase difference.

However, it is necessary to appropriately select both the material of the birefringent film with a large retardation and the material of the birefringent film with a small retardation in the phase difference plate disclosed in Japanese Patent Application Publication No. 05-027118. Also, it I necessary to stack the birefringent film with a large retardation and the birefringent film with a small retardation on the condition that their principal axes are crossed.

On the other hand, Japanese Patent Application Publication No. 10-068816 discloses a phase difference plate characterized in that, a 1/4 wave plate in which the phase difference of double-refracted light is 1/4 of the wavelength thereof and a 1/2 wave plate in which the phase difference of double-refracted light is 1/2 of the wavelength thereof are laminated on the condition that their principal axes are crossed, as a phase difference plate with a small amount of change in a phase difference dependent on a wavelength and being excellent in the keeping it constant even use of one kind of easily available birefringent material.

However, it is also necessary to select appropriate birefringent materials and it is necessary to laminate the 1/4 wave plate and the 1/2 wave plate on the condition that their principal axes are crossed at a previously designed angle in the phase difference plate disclosed in Japanese Patent Application Publication No. 10-068816. Furthermore, it is necessary for the thickness of the phase difference plate to be approximately a thickness of 3/4 of the wavelength, in order to laminate the 1/4 wave plate and the 1/2 wave plate.

On the other hand, a wave plate has been suggested which requires no use of a birefringent material. As such a wave plate, a wave plate can be provided in which a fine periodic structure is formed on a material having no birefringence. That is, structural birefringence is utilized which is caused by forming a fine periodic structure on a material having no birefringence.

For example, Japanese Patent Application Publication No. 2005-106901 discloses an image projecting apparatus having at least one image displaying element, an illuminating optical system for illuminating the at least one liquid-crystal display element with light from a light source, and a projecting optical system for projecting light from the at least one image displaying element on a surface to be projected, characterized by including a phase plate having a periodic structure with a period less than a used wavelength.

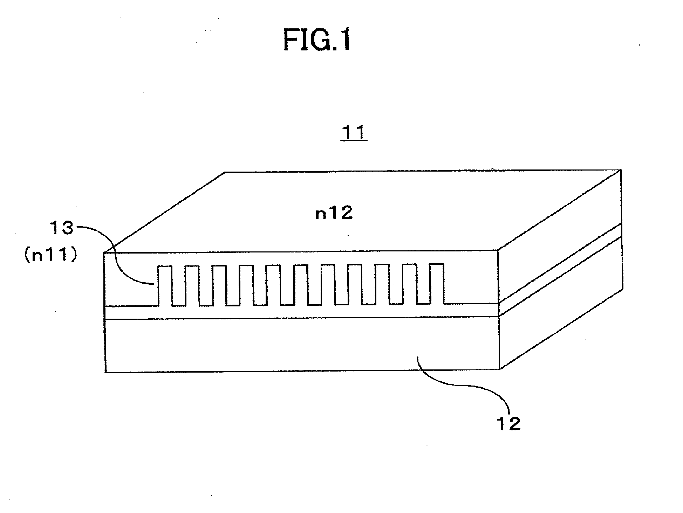

FIG. 1 is a diagram showing an example of a conventional phase plate having a periodic structure with a period less than a used wavelength. In a conventional phase plate 11 shown in FIG. 1 and disclosed in Japanese Patent Application Publication No. 2005-106901, a grid structure 13 is formed of a first material (n1) in a plane shape while a parallel plate is a substrate 12, and further, a second material (n2) is formed so as to embed the grid. Then, Japanese Patent Application Publication No. 2005-106901 discloses that the two material are provided such that the wavelength dispersion of the refractive indices thereof are different, whereby the wavelength range can be increased in which it functions as a 1/4 phase plate.

However, since the grid structure is formed of the first material (n1) in a planar shape while a parallel plate is the substrate, and further, the second material (n2) is formed so as to embed the grid in the conventional phase plate shown in FIG. 1, only a phase difference which monotonically varies with a change in the wavelength of light incident on the phase plate is provided to the light incident on the phase plate. Therefore, in an image projecting apparatus, the conventional phase plate shown in FIG. 1 is difficult to provide a phase difference in a predetermined range to light which is orthogonally polarized to each other, over a wide wavelength range of the light, and therefore, is insufficient as a wave plate used in an image projecting apparatus.

JP 2005-106901 A relates to an image projection device. An image projector includes three reflection liquid crystal panels for red, green and blue, an illumination optical system for illuminating the three reflection liquid crystal panels with the light from a light source by using two polarization beam splitters, and a projection optical system for projecting a light from the reflection liquid crystal panel on a screen. A quarter-wavelength plate, having a cyclic structure (SWS) of a cycle shorter than the visible light region is arranged between the two polarization beam splitter and the three reflection liquid crystal panels. In this respect, it is prevented the temperature increase of a light source part by allowing return light, when a reflection type liquid crystal display element displays black so that the light will not return to the light source.

US-6,563,582 B1 relates to an achromatic retarder array for polarization imaging. In addition to having color, light waves have the attribute of polarization. An apparatus and method to convert circular polarized light into linearly polarized light over a wide range of wavelengths is provided by utilizing a first surface-relief grating functioning as a quarter-wave waveplate and a second surface-relief grating functioning as a half-wave waveplate. A plurality of such devices are arranged in a two-dimensional array and combined with an array of linear polarizers and an array of photodetectors to form a polarization imaging sensor. Such a sensor could have applications in automobiles to alert drivers of the presence of other vehicles, especially at night, in fog, or in rain. Military applications include the detection of vehicles placed among trees and shrubs. Another advantage of using circular polarization images is that the sign and magnitude of the circular polarization can potentially be used to reveal the spatial orientation, material, and surface roughness of the object's surface.

### SUMMARY OF THE INVENTION

The invention is defined by the subject-matter of the independent claims. The dependent claims are directed to advantageous embodiments.

### ADVANTAGES OF THE INVENTION

Advantageously, there is provided an optical element with a phase structure configured to provide a phase difference between a first polarization component of light and a second polarization component of the light which is orthogonal to the first polarization component, wherein the phase structure comprises a first phase structure configured to provide a maximum phase difference to light with a first wavelength and a second phase structure configured to provide a maximum phase difference to light with a second wavelength which is different from the first wavelength.

Advantageously, there is provided an optical element with a phase structure configured to provide a phase difference between a first polarization component of light and a second polarization component of the light which is orthogonal to the first polarization component, wherein the phase structure comprises a first fine periodic structure which comprises plural first dielectric plates with a first thickness and a first refractive index which are periodically arranged in a first fine period and a second fine periodic structure which comprises plural second dielectric plates with a second thickness and a second refractive index which are periodically arranged in a second fine period, wherein a refractive index of a medium between the plural first dielectric plates and a refractive index of a medium between the plural second dielectric plates are different from the first refractive index and the second refractive index, and at least one of, the first fine period and the second fine period, a ratio of the first thickness to the first fine period and a ratio of the second thickness to the second fine period, and the first refractive index and the second refractive index, is different from each other.

Advantageously, there is provided an image projecting apparatus configured to project an image on a display surface on which an image is displayed, characterized by comprising the optical element as described above.

### BRIEF DESCRIPTION OF THE DRAWINGS

FIG. 1 is a diagram showing an example of a conventional phase plate having a periodic structure with a period less than a used wavelength.
FIG. 2 is a diagram illustrating an example of an optical element according to the first embodiment of the present invention.
FIG. 3 is a diagram showing a first example of an optical element according to the second embodiment of the present invention.
FIG. 4 is a diagram showing a second example of an optical element according to the second embodiment of the present invention.
FIG. 5 is a diagram showing a third example of an optical element according to the second embodiment of the present invention.
FIG. 6 is a diagram illustrating an example of a method for manufacturing an optical element according to the second embodiment of the present invention.
FIG. 7 is a diagram showing an example of an optical element according to the second embodiment of the present invention, which includes a polarized light separating structure.
FIG. 8 is a diagram showing a first example of an image projecting apparatus according to the third embodiment of the present invention.
FIG. 9 is a diagram showing a second example of an image projecting apparatus according to the third embodiment of the present invention.
FIG. 10 is a diagram showing a third example of an image projecting apparatus according to the third embodiment of the present invention.
FIG. 11 is a diagram showing the wavelength dependence of a phase difference provided by a half-wave plate designed in a first practical example of the present invention.
FIG. 12 is a diagram showing the wavelength dependence of a phase difference provided by a half-wave plate designed in a second practical example of the present invention.
FIG. 13 is a diagram showing the wavelength dependence of a phase difference provided by a half-wave plate designed in a third practical example of the present invention.
FIG. 14 is a diagram showing the wavelength dependence of a phase difference provided by a half-wave plate designed in a fourth practical example of the present invention.

### DETAILED DESCRIPTION OF THE PREFERRED EMBODIMENTS

Next, embodiments of the present invention are described with reference to the drawings.

### [First embodiment]

A first embodiment of the present invention is an optical element with a phase structure configured to provide a phase difference between a first polarization component of light and a second polarization component of the light which is orthogonal to the first polarization component, in which the phase structure includes a first phase structure configured to provide a maximum phase difference to light with a first wavelength and a second phase structure configured to provide a maximum phase difference to light with a second wavelength which is different from the first wavelength.

The optical element according to the first embodiment of the present invention is an optical element which can provide a phase difference between a first polarization component of light and a second polarization component of the light which is orthogonal to the first polarization component. The form of an optical element according to the first embodiment of the present invention is not particularly limited and an optical element according to the first embodiment of the present invention may be, for example, a plate-shaped optical element (which may be also referred to as a phase plate or a wave plate) configured to provide a particular phase difference between a first polarization component of light and a second polarization component of the light which is orthogonal to the first polarization component.

Herein, the light may be polarized light or may be not-polarized light, and the light is preferably polarized light. The polarized light may be, for example, linearly polarized light or circularly polarized light. The light has a first polarization component and a second polarization component and the first polarization component of light and the second polarization component of the light are orthogonal to each other. Herein, the first polarization component of light and the second polarization component of the light which are orthogonal to each other mean that the vibration plane of an electric field of the first polarization component of light is orthogonal to the vibration plane of an electric field of the second polarization component of the light. The first polarization component and the second polarization component may be, for example, represented by P-polarized light which oscillates in a plane parallel to the plane of incidence and S-polarized light which oscillates in a plane perpendicular to the plane of incidence, respectively.

The phase difference provided between the first polarization component of light and the second polarization component of the light is a difference (radian) between the vibration phase of the first polarization component of light and the vibration phase of the second polarization component of the light, and may be also represented by a retardation (with a dimension of length) / wavelength of light (with a dimension of length) × 2π which is a distance corresponding to a phase difference provided between the first polarization component of light and the second polarization component of the light.

Additionally, the phase difference provided between the first polarization component of light and the second polarization component of the light depends on a wavelength of the light.

Also, the optical element according to the first embodiment of the present invention has a phase structure configured to provide a phase difference between the first polarization component of light and the second polarization component of the light which is orthogonal to the first polarization component. Then, the phase structure includes a first phase structure configured to provide a maximum phase difference to light with a first wavelength and a second phase structure configured to provide a maximum phase difference to light with a second wavelength which is different from the first wavelength. That is, the first phase structure provides a maximum phase difference to the light with a first wavelength and provides a phase difference which is smaller than the phase difference provided to the light with a first wavelength, to light with a wavelength which is longer than the first wavelength or light with a wavelength which is shorter than the first wavelength. Similarly, the second phase structure provides a maximum phase difference to the light with a second wavelength and provides a phase difference which is smaller than the phase difference provided to the light with a second wavelength, to light with a wavelength which is longer than the second wavelength or light with a wavelength which is shorter than the second wavelength.

Then, as light having the first polarization component and the second polarization component which is orthogonal to the first polarization component is passed through the first phase structure and second phase structure of the optical element, the light is provided with a phase difference corresponding to the sum of a phase difference provided by the first phase structure and a phase difference provided by the second phase structure which depended on the wavelength of light. More particularly, the light with a first wavelength is provided with a phase difference corresponding to the sum of a maximum phase difference provided to the light with a first wavelength by a first phase structure and a phase difference provided to light with a first wavelength by the second phase structure (which is smaller than a phase difference provided to the light with a second wavelength by the second phase structure). Similarly, the light with a second wavelength is provided with a phase difference corresponding to the sum of a maximum phase difference provided to light with a second wavelength by the second phase structure and a phase difference provided to light with a second wavelength by the first phase structure (which is smaller than the phase difference provided to light with a first wavelength by the first phase structure). Further, light with a wavelength which is different from the first wavelength and the second wavelength is provided with a phase difference corresponding to the sum of a phase difference provided to the light with the wavelength by the first phase structure (which is smaller than a phase difference provided to the light with a first wavelength by the first phase structure) and a phase difference provided to light with the wavelength by the second phase structure (which is smaller than a phase difference provided to the light with a second wavelength by the second phase structure).

As a result, a phase difference in a predetermined range thereof can be provided between the first polarization component of light and the second polarization component of the light which is orthogonal to the first polarization component, over a wider range of light wavelength.

Herein, it is preferable that a range of light wavelength which can provide a phase difference in a predetermined range thereof is as wide as possible. However, the range of light wavelength which can provide a phase difference in a predetermined range thereof, for example, may be a range of wavelength between the first wavelength and the second wavelength (which may or may not include the first wavelength and/or the second wavelength) or may be at least one portion of a range of wavelength between the first wavelength and the second wavelength (which may or may not include the first wavelength and/or the second wavelength).

Also, the phase difference in a predetermined range thereof includes a design value of a phase difference provided between the first polarization component of light and the second polarization component of the light which is orthogonal to the first polarization component, which phase difference is required for the optical element. Then, the range of a phase difference in a predetermined range thereof is preferably equal to or less than the range of a phase difference which is required for the optical element and, most preferably, is completely or substantially zero. Additionally, the range of a phase difference in a predetermined range thereof which is zero means that a phase difference with a design value thereof is provided between the first polarization component of light and the second polarization component of the light which is orthogonal to the first polarization component. Also, the range of a phase difference in a predetermined range thereof which is substantially zero means that a deviation from the design value of a phase difference provided between the first polarization component of light and the second polarization component of the light which is orthogonal to the first polarization component can be ignored.

In the optical element according to the first embodiment of the present invention, particularly, one of the first phase structure and second phase structure is a phase structure which provides a phase difference increasing with the increase (or decrease) of a wavelength and the other of the first phase structure and second phase structure is a phase structure which provides a phase difference decreasing with the increase (or decreases) of a wavelength, with respect to light with a wavelength between the first wavelength and the second wavelength.

Therefore, the light with a wavelength between the first wavelength and the second wavelength is provided with the sum of a phase difference increasing with the increase (or decrease) of the wavelength thereof by one of the first phase structure and second phase structure and a phase difference decreasing with the increase (or decrease) of the wavelength by the other of the first phase structure and second phase structure.

Accordingly, a phase difference in a predetermined range thereof can be provided between the first polarization component of light and the second polarization component of the light which is orthogonal to the first polarization component, over a wider range of light wavelength between the first wavelength and the second wavelength.

Additionally, the phase structure in the optical element according to the first embodiment of the present invention may include a further phase structure configured to provide a maximum phase difference to light with a wavelength which is different from the first wavelength and the second wavelength, in addition to the first phase structure and the second phase structure.

When the phase structure in the optical element according to the first embodiment of the present invention includes a further phase structure configured to provide a maximum phase difference to light with a wavelength which is different from the first wavelength and the second wavelength, a phase difference in a predetermined range thereof can be provided between the first polarization component of light and the second polarization component of the light which is orthogonal to the first polarization component and/or the range of a phase difference provided between the first polarization component of light and the second polarization component of the light which is orthogonal to the first polarization component can be further reduced, over a more wider range of light wavelength.

According to the optical element according to the first embodiment of the present invention, there can be provided an optical element capable of providing a phase difference in a predetermined range thereof between the first polarization component of light and the second polarization component of the light which is orthogonal to the first polarization component, over a wider range of light wavelength.

In the optical element according to the first embodiment of the present invention, preferably, a phase difference provided to light with a third wavelength between the first wavelength and the second wavelength, a phase difference provided to light with a fourth wavelength between the first wavelength and the second wavelength, which is different from the third wavelength, and a phase difference provided to light with a fifth wavelength between the third wavelength and the fourth wavelength are substantially equal.

Herein, a phase difference provided to light with a third wavelength between the first wavelength and the second wavelength, a phase difference provided to light with a fourth wavelength between the first wavelength and the second wavelength, which is different from the third wavelength, and a phase difference provided to light with a fifth wavelength between the third wavelength and the fourth wavelength, which is substantially equal, mean that all of the phase difference provided to light with the third wavelength, phase difference provided to light with the fourth wavelength, and phase difference provided to light with the fifth wavelength are completely identical (a design value thereof) or all of the phase difference provided to light with the third wavelength, phase difference provided to light with the fourth wavelength, and phase difference provided to light with the fifth wavelength are in a predetermined range which includes a design value thereof and has a range such that it can be ignored.

When a phase difference provided to light with the third wavelength, a phase difference provided to light with the fourth wavelength, and a phase difference provided to light with the fifth wavelength are substantially equal, light with an arbitrary wavelength between the third wavelength and the fourth wavelength (which may or may not include the third wavelength and/or the fourth wavelength) can be provided with a phase difference which is completely constant (a design value thereof) or provided with a phase difference in a predetermined range thereof which includes a design value thereof.

In the optical element according to the first embodiment of the present invention, preferably, a phase difference which is substantially constant is provided to light with an arbitrary wavelength between the third wavelength and the fourth wavelength.

Herein, the phase difference that is substantially constant which is provided to light with an arbitrary wavelength between the third wavelength and the fourth wavelength means that a phase difference which is completely identical (a design value thereof) is provided to light with an arbitrary wavelength between the third wavelength and the fourth wavelength (which may or may not include the third wavelength and/or the fourth wavelength) or a phase difference in a predetermined range thereof which includes a design value thereof and has a range such that it can be ignored is provided to light with an arbitrary wavelength between the third wavelength and the fourth wavelength.

When a phase difference which is substantially constant is provided to light with an arbitrary wavelength between the third wavelength and the fourth wavelength, a phase difference which is completely constant (a design value thereof) can be provided or a phase difference in a predetermined range thereof which includes a design value thereof and can be generally ignored can be provided, to the light with an arbitrary wavelength between the third wavelength and the fourth wavelength.

In the optical element according to the first embodiment of the present invention, preferably, the third wavelength and the fourth wavelength are 420 nm and 520 nm, respectively.

When the third wavelength and the fourth wavelength are 420 nm and 520 nm, respectively, a phase difference which is completely constant (a design value thereof) can be provided or a phase difference in a predetermined range thereof which includes a design value or a predetermined range thereof which includes a design value and can be generally ignored can be provided, to light with an arbitrary wavelength between 420 nm and 520 nm (which may or may not include 420 nm and/or 520nm).

Additionally, light with an arbitrary wavelength between 420 nm and 520 nm (which may or may not include 420 nm and/or 520 nm) generally corresponds to light with a blue color.

In the optical element according to the first embodiment of the present invention, preferably, the third wavelength and the fourth wavelength are 520 nm and 620 nm, respectively.

When the third wavelength and the fourth wavelength are 520 nm and 620 nm, respectively, a phase difference which is completely constant (a design value thereof) can be provided or a phase difference in a predetermined range thereof which includes a design value or a predetermined range thereof which includes a design value and can be generally ignored can be provided, to light with an arbitrary wavelength between 520 nm and 620 nm (which may or may not include 520 nm and/or 620nm).

Additionally, light with an arbitrary wavelength between 520 nm and 620 nm (which may or may not include 520 nm and/or 620 nm) generally corresponds to light with a green color.

In the optical element according to the first embodiment of the present invention, preferably, the third wavelength and the fourth wavelength are 620 nm and 700 nm, respectively.

When the third wavelength and the fourth wavelength are 620 nm and 700 nm, respectively, a phase difference which is completely constant (a design value thereof) can be provided or a phase difference in a predetermined range thereof which includes a design value or a predetermined range thereof which includes a design value and can be generally ignored can be provided, to light with an arbitrary wavelength between 620 nm and 700 nm (which may or may not include 620 nm and/or 700nm).

Additionally, light with an arbitrary wavelength between 620 nm and 700 nm (which may or may not include 620 nm and/or 700 nm) generally corresponds to light with a red color.

In the optical element according to the first embodiment of the present invention, preferably, the third wavelength and the fourth wavelength are 420 nm and 700 nm, respectively.

When the third wavelength and the fourth wavelength are 420 nm and 700 nm, respectively, a phase difference which is completely constant (a design value thereof) can be provided or a phase difference in a predetermined range thereof which includes a design value or a predetermined range thereof which includes a design value and can be generally ignored can be provided, to light with an arbitrary wavelength between 420 nm and 700 nm (which may or may not include 420 nm and/or 700nm).

Additionally, light with an arbitrary wavelength between 420 nm and 700 nm (which may or may not include 420 nm and/or 700 nm) generally corresponds to visible light.

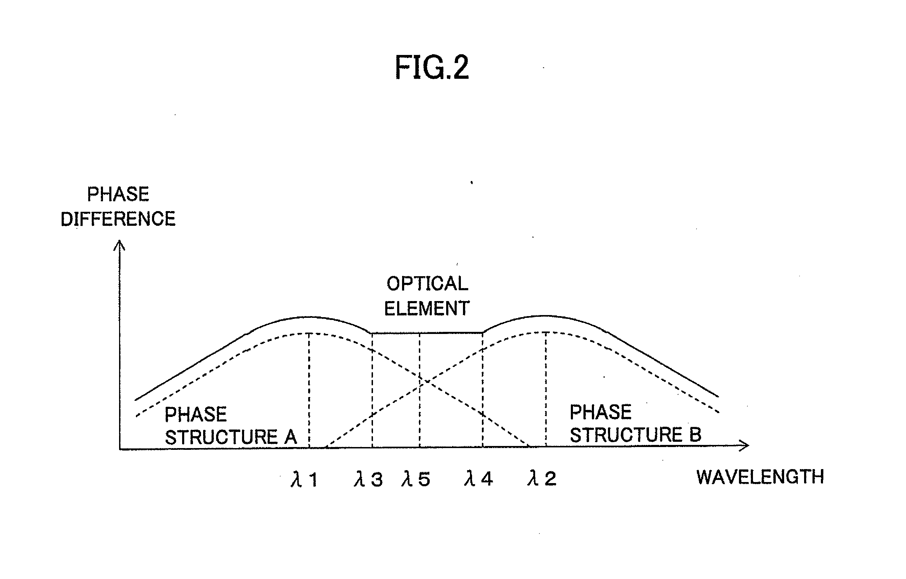

FIG.2 is a diagram illustrating an example of the optical element according to the first embodiment of the present invention.

As shown in FIG. 2, an optical element according to the first embodiment of the present invention is an optical element with a phase structure for providing a phase difference between the first polarization component of light and the second polarization component of the light orthogonal to the first polarization component, wherein the phase structure includes a first phase structure A for providing a maximum phase difference to light with a first wavelength λ1 and a second phase structure B for providing a maximum phase difference to light with a second wavelength λ2 which is different from the first wavelength λ1.

Herein, as light having the first polarization component and the second polarization component which is orthogonal to the first polarization component is passed through the first phase structure A and second phase structure B of the optical element, the light is provided with a phase difference corresponding to the sum of a phase difference provided by the first phase structure A and a phase difference provided by the second phase structure B, which depend on the wavelength of the light.

As a result, a phase difference in a predetermined range thereof can be provided between the first polarization component of light and the second polarization component of the light which is orthogonal to the first polarization component, over a wider range of light wavelength.

Particularly, for light with a wavelength between the first wavelength λ1 and the second wavelength λ2, the first phase structure A is a phase structure for providing a phase difference decreasing with the increase of a wavelength and the second phase structure B is a phase structure for providing a phase difference increasing with the increase of a wavelength.

Therefore, light with a wavelength between the first wavelength λ1 and the second wavelength λ2 is provided with the sum of a phase difference decreasing with the increase of the wavelength which is provided by the first phase structure A and a phase difference increasing with the increase of the wavelength which is provided by second phase structure B. Accordingly, a phase difference in a predetermined range thereof can be provided between the first polarization component of light and the second polarization component of the light which is orthogonal to the first polarization component over a wider range of light wavelength between the first wavelength λ1 and the second wavelength λ2.

Thus, due to the optical element according to the first embodiment of the present invention, there can be provided an optical element capable of providing a phase difference in a predetermined range thereof between the first polarization component of light and the second polarization component of the light which is orthogonal to the first polarization component over a wider range of light wavelength.

Also, in the optical element according to the first embodiment of the present invention, preferably, a phase difference provided to light with a third wavelength λ3 between the first wavelength λ1 and the second wavelength λ2, a phase difference provided to light with a fourth wavelength λ4 between the first wavelength λ1 and the second wavelength λ2 which is different from the third wavelength λ3, and a phase difference provided to light with a fifth wavelength λ5 between the third wavelength λ3 and the fourth wavelength λ4 are substantially equal. In this case, a phase difference which is completely constant (a design value thereof) can be provided or a phase difference in a predetermined range thereof which includes a design value can be provided, to light with an arbitrary wavelength between the third wavelength λ3 and the fourth wavelength λ4.

Furthermore, in the optical element according to the first embodiment of the present invention, preferably, a phase difference which is substantially constant is provided to light with an arbitrary wavelength between the third wavelength λ3 and the fourth wavelength λ4. In this case, a phase difference which is completely constant (a design value thereof) can be provided or a phase difference in a predetermined range thereof which includes a design value and can be generally ignored can be provided, to light with an arbitrary wavelength between the third wavelength λ3 and the fourth wavelength λ4.

In the optical element according to the first embodiment of the present invention, for example, the third wavelength λ3 and the fourth wavelength λ4 are 420 nm and 520 nm, respectively. In this case, light with a blue color can be provided with a phase difference which is completely constant (a design value thereof) can be provided or a phase difference in a predetermined range thereof which includes a design value or in a predetermined range thereof which includes a design value and can be generally ignored can be provided.

Also, in the optical element according to the first embodiment of the present invention, for example, the third wavelength λ3 and the fourth wavelength λ4 are 520 nm and 620 nm, respectively. In this case, light with a green color can be provided with a phase difference which is completely constant (a design value thereof) can be provided or a phase difference in a predetermined range thereof which includes a design value or in a predetermined range thereof which includes a design value and can be generally ignored can be provided.

Furthermore, in the optical element according to the first embodiment of the present invention, for example, the third wavelength λ3 and the fourth wavelength λ4 are 620 nm and 700 nm, respectively. In this case, light with a red color can be provided with a phase difference which is completely constant (a design value thereof) can be provided or a phase difference in a predetermined range thereof which includes a design value or in a predetermined range thereof which includes a design value and can be generally ignored can be provided.

In the optical element according to the first embodiment of the present invention, preferably, the third wavelength λ3 and the fourth wavelength λ4 are 420 nm and 700 nm, respectively. In this case, visible light can be provided with a phase difference which is completely constant (a design value thereof) can be provided or a phase difference in a predetermined range thereof which includes a design value or in a predetermined range thereof which includes a design value and can be generally ignored can be provided.

### [Second embodiment]

A second embodiment of the present invention is an optical element with a phase structure configured to provide a phase difference between the first polarization component of light and the second polarization component of the light which is orthogonal to the first polarization component, in which the phase structure includes a first fine periodic structure which comprises plural first dielectric plates with a first thickness and a first refractive index which are periodically arranged in a first fine period and a second fine periodic structure which includes plural second dielectric plates with a second thickness and a second refractive index which are periodically arranged in a second fine period, wherein a refractive index of a medium between the plural first dielectric plates and a refractive index of a medium between the plural second dielectric plates are different from the first refractive index and the second refractive index, and at least one of, the first fine period and the second fine period, a ratio of the first thickness to the first fine period and a ratio of the second thickness to the second fine period, and the first refractive index and the second refractive index, is different from each other.

An optical element according to the second embodiment of the present invention is an optical element which can provide a phase difference between the first polarization component of light and the second polarization component of the light which is orthogonal to the first polarization component. The form of an optical element according to the second embodiment of the present invention is not particularly limited and the optical element according to the second embodiment of the present invention may be, for example, a plate-shaped optical element (which may be also referred to as a phase plate or a wave plate) configured to provide a particular phase difference between the first polarization component of light and the second polarization component of the light which is orthogonal to the first polarization component.

Herein, the light may be polarized light or may be not-polarized light and the light is preferably polarized light. The polarized light may be, for example, linearly-polarized light or may be circularly-polarized light. The light has a first polarization component and a second polarization component and the first polarization component of light and the second polarization component of the light are orthogonal to each other. Herein, the first polarization component of light and the second polarization component of the light which are orthogonal to each other mean that the vibration plane of an electric field of the first polarization component of light is orthogonal to the vibration plane of an electric field of the second polarization component of the light. The first polarization component of light and the second polarization component of the light are represented by, for example, P-polarized light which oscillates in a plane parallel to the plane of incidence and S-polarized light which oscillates in a plane orthogonal to the plane of incidence, respectively.

The phase difference provided between the first polarization component of light and the second polarization component of the light is a difference (radian) between a phase of vibration of the first polarization component of light and a phase of vibration of the second polarization component of the light and may be also presented by a retardation (with a dimension of length) / a wavelength (with a dimension of length) x 2π which is a distance corresponding to a phase difference provided between the first polarization component of light and the second polarization component of the light. Additionally, the phase difference provided between the first polarization component of light and the second polarization component of the light depends on a wavelength of the light.

Also, the optical element according to the second embodiment of the present invention has a phase structure configured to provide a phase difference between the first polarization component of light and the second polarization component of the light which is orthogonal to the first polarization component. Then, the phase structure includes a first fine periodic structure and a second fine periodic structure. The first fine periodic structure includes plural first dielectric plates. The first dielectric plate has a first thickness and a first refractive index. The plural first dielectric plates are periodically arranged in a first fine period. The second fine periodic structure includes plural second dielectric plates. The second dielectric plate has a second thickness and a second refractive index. The plural second dielectric plates are periodically arranged in a second fine period.

Each of a dielectric material as a material of the first dielectric plate and a dielectric material as a material of the second dielectric plate means to be an arbitrary material except metals which material can transmit light. Each of a dielectric material as a material of the first dielectric plate and a dielectric material as a material of the second dielectric plate is not required to be a material having an index of birefringence and may be a material having an isotropic refractive index. Additionally, a dielectric material of the first dielectric plate may be identical to or may be different from a dielectric material of the second dielectric plate. Therefore, various dielectric materials can be selected as a material of the first dielectric plate or a material of the second dielectric plate. Each of a dielectric material as a material of the first dielectric plate and a dielectric material as a material of the second dielectric plate may be an organic material or may be an inorganic material.

The first refractive index of the first dielectric plate and the second refractive index of the second dielectric plate are the refractive index of a dielectric material as a material of the first dielectric plate and the refractive indexes of a dielectric material as a material of the second dielectric plate, respectively. When each of the refractive index of a dielectric material as a material of the first dielectric plate and the refractive indexes of a dielectric material as a material of the second dielectric plate is a dielectric material having an isotropic refractive index, the first refractive index of the first dielectric plate and the second refractive index of the second dielectric plate are also isotropic refractive indexes.

Each of the plate of the first dielectric plate and the plate of the second dielectric plate means to be a plate having three pairs of sufficiently parallel and flat faces such that a phase difference is provided between the first polarization component of light and the second polarization component of the light which is orthogonal to the first polarization component.

The first thickness of the first dielectric plate is a distance between the two surfaces which are planes of the first dielectric plate in directions where the plural first dielectric plates are periodically arranged. Similarly, the second thickness of the second dielectric plate is a distance between the two surfaces which are planes of the second dielectric plate in directions where the plural second dielectric plates are periodically arranged.

The period of the first fine period means a distance between one of planes of the first dielectric plate in directions where the plural first dielectric plates are periodically arranged and a plane of another first dielectric plate which is adjacent to the first dielectric plate at the side of facing the first dielectric plate. Similarly, the period of the second fine period means a distance between one of planes of the second dielectric plate in directions where the plural second dielectric plates are periodically arranged and a plane of another second dielectric plate which is adjacent to the second dielectric plate at the side of facing the second dielectric plate.

Also, each of the degree of periodicity of the first fine period and the degree of periodicity of the second fine period means a sufficient periodicity such that a phase difference is provided between the first polarization component of light and the second polarization component of the light which is orthogonal to the first polarization component.

Each of the degree of "fine" in regard to the first fine period and the degree of "fine" in regard to the second fine period generally means a length such that each of the periodicity of the first fine period and the periodicity of the second fine period is equal to or less than the wavelength of light but cannot be ignored relative to the wavelength of light. Specifically, each of the degree of "fine" in regard to the first fine period and the degree of "fine" in regard to the second fine period means a length such that each of the periodicity of the first fine period and the periodicity of the second fine period is equal to or less than the minimum wavelength among wavelengths of light passing through the optical element but cannot be ignored relative to the maximum wavelength among wavelengths of light passing through the optical element. For example, when the light is visible light, each of the periodicity of the first fine period and the periodicity of the second fine period may be equal to or greater than 0.1 µm and equal to or less than 0.4 µm.

Additionally, the propagation direction of light passing through the first fine periodic structure (the directions of the optical axis of the first fine periodic structure) is aligned along the propagation direction of light passing through the second fine periodic structure (the directions of the optical axis of the second fine periodic structure). The degree of alignment of the directions of the optical axis of the first fine periodic structure with the directions of the optical axis of the second fine periodic structure is a sufficient degree such that a phase difference between the first polarization component of light and the second polarization component of the light which is orthogonal to the first polarization component is equally provided to light passing through the first fine periodic structure and the second fine periodic structure.

On the other hand, particularly, it is not necessary to align the first fine periodic structure with the second fine periodic structure in directions perpendicular to the directions of the optical axis of the first fine periodic structure or in directions perpendicular to the directions of the optical axis of the second fine periodic structure. Therefore, it is easier to manufacture the optical element according to the second embodiment of the present invention, compared to the conventional phase difference plates disclosed in Japanese Patent Application Publication No. 05-027118 and Japanese Patent Application Publication No. 10-068816.

Furthermore, the refractive index of a medium between the plural first dielectric plates and the refractive index of a medium between the plural second dielectric plates are different from the first refractive index and the second refractive index. Additionally, a medium between the plural first dielectric plates and a medium between the plural second dielectric plates may be different from or may be identical to each other. The medium between the plural first dielectric plates and the medium between the plural second dielectric plates are commonly identical and, for example, air.

Accordingly, there can be designed or adjusted each of a phase difference provided between the first polarization component of light passing through the first fine periodic structure and the second polarization component of the light which is orthogonal to the first polarization component and a phase difference provided between the first polarization component of light passing through the second fine periodic structure and the second polarization component of the light. Particularly, there can be designed or adjusted each of the wavelength dependence of a phase difference provided between the first polarization component of light passing through the first fine periodic structure and the second polarization component of the light and the wavelength dependence of a phase difference provided between the first polarization component of light passing through the second fine periodic structure and the second polarization component of the light.

In addition, at least one of, the first fine period and second fine period, the ratio of the first thickness to the first fine period and the ratio of the second thickness to the second fine period, and the first refractive index and the second refractive index, is different from each other. In other words, the first fine period and second fine periods are different from each other, and/or the ratio of the first thickness to the first fine period and the ratio of the second thickness to the second fine period are different from each other, and/or the first refractive index and the second refractive index are different from each other.

Accordingly, it is possible to make a phase difference provided between the first polarization component of light passing through the first fine periodic structure and the second polarization component of the light which is orthogonal to the first polarization component be different from a phase difference provided between the first polarization component of light passing through the second fine periodic structure and the second polarization component of the light. Particularly, it is possible to make the wavelength dependence of a phase difference provided between the first polarization component of light passing through the first fine periodic structure and the second polarization component of the light which is orthogonal to the first polarization component be different from the wavelength dependence of a phase difference provided between the first polarization component of light passing through the second fine periodic structure and the second polarization component of the light.

Additionally, in the optical element according to the second embodiment of the present invention, the phase structure may include a further fine periodic structure which includes plural dielectric plates with a particular thickness and a particular refractive index which are periodically arranged in a particular fine period, in addition to the first fine periodic structure and the second fine periodic structure. For example, there may be provided an optical element obtained by applying an element with a third fine periodic structure which includes plural third dielectric plates with a third thickness and a third refractive index on an element with the first fine periodic structure and the second fine periodic structure.

Also, there may be provided an optical element provided with a third fine periodic structure which includes plural third dielectric plates with a third thickness and a first refractive index and a fourth fine periodic structure which includes plural fourth dielectric plates with a third thickness and a second refractive index, between the first fine periodic structure and second fine periodic structure.

In the optical element according to the second embodiment of the present invention, the first fine periodic structure can be designed so as to provide a maximum phase difference to light with a first wavelength and the second fine periodic structure can be designed so as to provide a maximum phase difference to light with a second wavelength which is different from the first wavelength, since the phase structure includes the first fine periodic structure which includes plural first dielectric plates with a first thickness and a first refractive index which are periodically arranged in a first fine period and the second fine periodic structure which includes plural second dielectric plates with a second thickness and a second refractive index which are periodically arranged in a second fine period, wherein the refractive index of a medium between the plural first dielectric plates and the refractive index of a medium between the plural second dielectric plates are different from the first refractive index and the second refractive index, and at least one of, the first fine period and the second fine period, the ratio of the first thickness to the first fine period and the ratio of the second thickness to the second fine period, and the first refractive index and the second refractive index, is different from each other.

That is, the first fine periodic structure provides a maximum phase difference to light with a first wavelength and provides a phase difference which is smaller than the phase difference provided to the light with a first wavelength, to light with a wavelength which is longer than the first wavelength and light with a wavelength which is shorter than the first wavelength. Similarly, the second fine periodic structure provides a maximum phase difference to light with a second wavelength and provides a phase difference which is smaller than the phase difference provided to the light with a second wavelength, to light with a wavelength which is longer than the second wavelength and light with a wavelength which is shorter than the second wavelength.

Then, when light having a first polarization component and a second polarization component which is orthogonal to the first polarization component is passed through the first fine periodic structure and second fine periodic structure of the optical element, the light is provided with a phase difference corresponding to the sum of a phase difference provided by the first fine periodic structure and a phase difference provided by the second fine periodic structure which depend on the wavelength of the light. More specifically, the light with a first wavelength is provided with a phase difference corresponding to the sum of a maximum phase difference provided to the light with a first wavelength by the first fine periodic structure and a phase difference provided to light with a first wavelength by the second fine periodic structure (which is smaller than the phase difference provided to the light with a second wavelength by the second fine periodic structure). Similarly, the light with a second wavelength is provided with a phase difference corresponding to the sum of a maximum phase difference provided to the light with a second wavelength by the second fine periodic structure and a phase difference provided to the light with a second wavelength by the first fine periodic structure (which is smaller than the phase difference provided to the light with a first wavelength by the first fine periodic structure). Furthermore, light with a wavelength which is different from the first and second wavelengths is provided with a phase difference corresponding to the sum of a phase difference provided to the light with the wavelength by the first fine periodic structure (which is smaller than the phase difference provided to light with the first wavelength by the first fine periodic structure) and a phase difference provided to the light with the wavelength by the second fine periodic structure (which is smaller than the phase difference provided to light with the second wavelength by the second fine periodic structure).

As a result, a phase difference in a predetermined range thereof can be provided between the first polarization component of light and the second polarization component of the light which is orthogonal to the first polarization component, over a wider range of light wavelength.

Herein, it is preferable that a range of light wavelength which can provide a phase difference in a predetermined range thereof is as wide as possible. However, for example, the range of light wavelength which can provide a phase difference in a predetermined range thereof may be a range of wavelength between the first wavelength and the second wavelength (which may or may not include the first wavelength and/or the second wavelength) or may be at least one portion of a range of wavelength between the first wavelength and the second wavelength (which may or may not include the first wavelength and/or the second wavelength).

Also, the phase difference in a predetermined range thereof includes a design value of a phase difference provided between the first polarization component of light and the second polarization component of the light which is orthogonal to the first polarization component, which is required for the optical element. Then, the range of a phase difference in a predetermined range thereof is, preferably, equal to or less than the range of the phase difference which is required for the optical element, and most preferably, completely or substantially zero. Additionally, the range of a phase difference in a predetermined range thereof which is completely zero means that a phase difference which is a design value thereof is provided between the first polarization component of light and the second polarization component of the light which is orthogonal to the first polarization component. Also, the range of a phase difference in a predetermined range thereof which is substantially zero means that the deviation of a phase difference from the design value thereof which phase difference is provided between the first polarization component of light and the second polarization component of the light which is orthogonal to the first polarization component can be ignored.

In the optical element according to the second embodiment of the present invention, particularly for light with a wavelength between the first wavelength and the second wavelength, one of the first fine periodic structure and second fine periodic structure is a phase structure for providing a phase difference increasing with the increase (or decrease) of the wavelength and the other of the first fine periodic structure and second fine periodic structure is a phase structure for providing a phase difference decreasing with the increase (or decrease) of the wavelength. Therefore, the light with a wavelength between the first wavelength and the second wavelength is provided with the sum of a phase difference increasing with the increase (or decrease) of the wavelength which phase difference is provided by one of the first fine periodic structure and second fine periodic structure and a phase difference decreasing with the increase (or decrease) of the wavelength which phase difference is provided by the other of the first fine periodic structure and second fine periodic structure. Accordingly, a phase difference in a predetermined range thereof can be provided between the first polarization component of light and the second polarization component of the light which is orthogonal to the first polarization component, over a wider range of light wavelength between the first wavelength and the second wavelength.

Additionally, the phase structure in an optical element according to the second embodiment of the present invention may include a further fine periodic structure configured to provide a maximum phase difference to light with a wavelength which is different from the first wavelength and the second wavelength, in addition to the first fine periodic structure and second fine periodic structure.

When the phase structure in the optical element according to the second embodiment of the present invention includes a further fine periodic structure configured to provide a maximum phase difference to light with a wavelength which is different from the first wavelength and the second wavelength, a phase difference in a predetermined range thereof can be provided between the first polarization component of light and the second polarization component of the light which is orthogonal to the first polarization component, and/or the range of a phase difference provided between the first polarization component of light and the second polarization component of the light which is orthogonal to the first polarization component can be further decreased, over a further wider range of light wavelength.

According to the second embodiment of the present invention, an optical element according to the first embodiment of the present invention can be provided. As a result, according to the second embodiment of the present invention, there can be provided an optical element capable of providing a phase difference in a predetermined range thereof between the first polarization component of light and the second polarization component of the light which is orthogonal to the first polarization component, over a wider range of light wavelength, similarly to the case of the first embodiment of the present invention.

In an optical element according to the second embodiment of the present invention, preferably, the first fine periodic structure and the second fine periodic structure are designed such that a phase difference provided to light with a third wavelength between the first wavelength and the second wavelength, a phase difference provided to light with a fourth wavelength between the first wavelength and the second wavelength which is different from the third wavelength, and a phase difference provided to light with a fifth wavelength between the third wavelength and the fourth wavelength, are substantially equal.

Herein, a phase difference provided to light with a third wavelength between the first wavelength and the second wavelength, a phase difference provided to light with a fourth wavelength between the first wavelength and the second wavelength which is different from the third wavelength, and a phase difference provided to light with a fifth wavelength between the third wavelength and the fourth wavelength, which are substantially equal, mean that all of the phase difference provided to light with the third wavelength, phase difference provided to light with the fourth wavelength, and phase difference provided to light with the fifth wavelength are completely identical (a design value thereof) or all of the phase difference provided to light with the third wavelength, phase difference provided to light with the fourth wavelength, and phase difference provided to light with the fifth wavelength include a design value thereof and are in a predetermined range which can be generally ignored.

When a phase difference provided to light with the third wavelength, a phase difference provided to light with the fourth wavelength, and a phase difference provided to light with the fifth wavelength are substantially equal, a phase difference which is completely constant (a design value thereof) can be provided or a phase difference in a predetermined range which includes a design value thereof can be provided, to light with an arbitrary wavelength between the third wavelength and the fourth wavelength (which may or may not include the third wavelength and/or the fourth wavelength).

In the optical element according to the second embodiment of the present invention, preferably, the first fine periodic structure and the second fine periodic structure are designed so as to provide a phase difference which is substantially constant to light with an arbitrary wavelength between the third wavelength and the fourth wavelength.

Herein, to provide a phase difference which is substantially constant to light with an arbitrary wavelength between the third wavelength and the fourth wavelength means that a phase difference which is completely identical (a design value thereof) is provided to light with an arbitrary wavelength between the third wavelength and the fourth wavelength (which may or may not include the third wavelength and/or the fourth wavelength) or a phase difference which includes a design value thereof and is in a predetermined range which can be generally ignored is provided to light with an arbitrary wavelength between the third wavelength and the fourth wavelength.

When a phase difference which is substantially constant is provided to light with an arbitrary wavelength between the third wavelength and the fourth wavelength, a phase difference which is completely constant (a design value thereof) can be provided or a phase difference in a predetermined range thereof which includes a design value thereof and can be generally ignored can be provided, to light with an arbitrary wavelength between the third wavelength and the fourth wavelength.

In the optical element according to the second embodiment of the present invention, preferably, the first fine periodic structure and the second fine periodic structure are designed such that the third wavelength and the fourth wavelength are 420 nm and 520 nm, respectively.

When the third wavelength and the fourth wavelength are 420 nm and 520 nm, respectively, a phase difference which is completely constant (a design value thereof) can be provided or a phase difference in a predetermined range which includes a design value thereof or in a predetermined range which includes a design value thereof and can be generally ignored can be provided, to light with an arbitrary wavelength between 420 nm and 520 nm (which may or may not include 420 nm and/or 520 nm). Additionally, the light with an arbitrary wavelength between 420 nm and 520 nm (which may or may not include 420 nm and/or 520 nm) generally corresponds to light with a blue color.

In the optical element according to the second embodiment of the present invention, preferably, the first fine periodic structure and the second fine periodic structure are designed such that the third wavelength and the fourth wavelength are 520 nm and 620 nm, respectively.

When the third wavelength and the fourth wavelength are 520 nm and 620 nm, respectively, a phase difference which is completely constant (a design value thereof) can be provided or a phase difference in a predetermined range which includes a design value thereof or in a predetermined range which includes a design value thereof and can be generally ignored can be provided, to light with an arbitrary wavelength between 520 nm and 620 nm (which may or may not include 520 nm and/or 620 nm). Additionally, the light with an arbitrary wavelength between 520 nm and 620 nm (which may or may not include 520 nm and/or 620 nm) generally corresponds to light with a green color.

In the optical element according to the second embodiment of the present invention, preferably, the first fine periodic structure and the second fine periodic structure are designed such that the third wavelength and the fourth wavelength are 620 nm and 700 nm, respectively.

When the third wavelength and the fourth wavelength are 620 nm and 700 nm, respectively, a phase difference which is completely constant (a design value thereof) can be provided or a phase difference in a predetermined range which includes a design value thereof or in a predetermined range which includes a design value thereof and can be generally ignored can be provided, to light with an arbitrary wavelength between 620 nm and 700 nm (which may or may not include 620 nm and/or 700 nm). Additionally, the light with an arbitrary wavelength between 620 nm and 700 nm (which may or may not include 620 nm and/or 700 nm) generally corresponds to light with a red color.

In the optical element according to the second embodiment of the present invention, preferably, the first fine periodic structure and the second fine periodic structure are designed such that the third wavelength and the fourth wavelength are 420 nm and 700 nm, respectively.

When the third wavelength and the fourth wavelength are 420 nm and 700 nm, respectively, a phase difference which is completely constant (a design value thereof) can be provided or a phase difference in a predetermined range which includes a design value thereof or in a predetermined range which includes a design value thereof and can be generally ignored can be provided, to light with an arbitrary wavelength between 420 nm and 700 nm (which may or may not include 420 nm and/or 700 nm). Additionally, the light with an arbitrary wavelength between 420 nm and 700 nm (which may or may not include 420 nm and/or 700 nm) generally corresponds to visible light.

In the optical element according to the second embodiment of the present invention, at least one of, the first fine period and the second fine period, the ratio of the first thickness to the first fine period and the ratio of the second thickness to the second fine period, and the first refractive index and the second refractive index, is different from each other, in order that the first fine periodic structure and the second fine periodic structure are designed such that the first fine periodic structure provides a maximum phase difference to light with a first wavelength and the second fine periodic structure provides a maximum phase difference to light with a second wavelength which is different from the first wavelength.

Specifically, first, the first fine period, the ratio of the first thickness to the first fine period, and the first refractive index are designed such that the first fine periodic structure provides a maximum phase difference to light with a first wavelength and provides a phase difference which is smaller than the phase difference provided to the light with a first wavelength, to light with a wavelength with a wavelength which is longer than the first wavelength and light with a wavelength which is short than the first wavelength. Next, the second fine period, the ratio of the second thickness to the second fine period, and the second refractive index are designed such that the second fine periodic structure provides a maximum phase difference to light with a second wavelength and provides a phase difference which is smaller than the phase difference provided to the light with a second wavelength, to light with a wavelength which is longer than the second wavelength and light with a wavelength which is shorter than the second wavelength. Then, a phase difference provided by the optical element according to the second embodiment of the present invention for each wavelength of light can be obtained, since a phase difference between the first polarization component of light and the second polarization component of the light which is orthogonal to the first polarization component, which phase difference is provided by the optical element according to the second embodiment of the present invention, is the sum of a phase difference provided by the first fine periodic structure and a phase difference provided by the second fine periodic structure. Herein, a phase difference provided by the optical element according to the second embodiment of the present invention for each wavelength of light need be a phase difference in a predetermined range which includes a design value. If a phase difference provided by the optical element according to the second embodiment of the present invention for each wavelength of light is not included in a phase difference in a predetermined range which includes a design value, at least one of, the first fine period and the second fine period, the ratio of the first thickness to the first fine period and the ratio of the second thickness to the second fine period, and the first refractive index and the second refractive index, is adjusted. Additionally, a phase difference provided by the first fine periodic structure and a phase difference provided by the second fine periodic structure can be calculated by using simulation software for the propagation of an electromagnetic field which utilizes a publicly known FDTD method (Finite Difference Time Domain method). When the phase structure of the optical element includes a further fine periodic structure which includes plural dielectric plates with a particular thickness and a particular refractive index which are periodically arranged in a particular fine period, in addition to the first fine periodic structure and the second fine periodic structure, an optical element according to the second embodiment of the present invention can be designed by a similar method.

Also, among a phase difference provided to light with a wavelength by a (the first or second) fine periodic structure, a (the first or second) fine period, the ratio of a (the first or second) thickness to a (the first or second) fine period, and a (the first or second) refractive index, generally, there are provided relations as follows.

When a (the first or second) fine period is changed, a light wavelength is shifted at which a phase difference provided by a (the first or second) fine periodic structure is maximum. When a (the first or second) fine period is increased, a light wavelength is increased at which a phase difference provided by a (the first or second) fine periodic structure is maximum. Herein, a (the first or second) fine period generally has a period which is equal to less than a minimum wavelength among the wavelengths of light passing through the optical element and cannot be ignored with respect to a maximum wavelength among the wavelengths of light passing through the optical element. For example, when the light is visible light, each of the first fine period and second fine period may be equal to or greater than 0.1 µm and equal to or less than 0.4 µm.

When the ratio of a (the first or second) thickness to a (the first or second) fine period (a filling factor) is changed, the rate of change of a phase difference provided by a (the first or second) fine periodic structure with the change of a light wavelength is changed and the absolute value of a phase difference provided by a (the first or second) fine periodic structure is also changed. Specifically, if the depth of a (the first or second) dielectric plate is constant and when the ratio of a (the first or second) thickness to a (the first or second) fine period (a filling factor) is approximately equal to or greater than 0.5 and equal to or less than 0.6, the rate of change of a phase difference provided by a (the first or second) fine periodic structure with the change of a light wavelength becomes the maximum thereof and the absolute value of a phase difference provided by a (the first or second) fine periodic structure also becomes the maximum thereof. On the contrary, when the ratio of a (the first or second) thickness to a (the first or second) fine period (a filling factor) is approximately less than 0.5 or greater than 0.6, the rate of change of a phase difference provided by a (the first or second) fine periodic structure with the change of a light wavelength is smaller than the maximum thereof and the absolute value of a phase difference provided by a (the first or second) fine periodic structure is also smaller than the maximum thereof.

When a (the first or second) refractive index is changed, a light wavelength is shifted at which a phase difference provided by a (the first or second) fine periodic structure is maximum. When a (the first or second) refractive index is increased, a light wavelength is decreased at which a phase difference provided by a (the first or second) fine periodic structure is maximum. However, it is necessary to select a value of the refractive index of a material which actually exists, for a (the first or second) refractive index.

In addition, when the depth of a (the first or the second) dielectric plate is changed, the absolute value of a phase difference provided by a (the first or second) fine periodic structure is changed. Herein, the depth of a (the first or the second) dielectric plate is a distance between two planes of a (the first or the second) dielectric plate along the direction of travel of light passing through a (the first or the second) dielectric plate. The absolute value of a phase difference provided by a (the first or second) fine periodic structure is in proportion to the depth of a (the first or second) dielectric plate. Specifically, when the depth of a (the first or second) dielectric plate is increased, the absolute value of a phase difference provided by a (the first or second) fine periodic structure is increased.

Additionally, even though the phase structure of the optical element includes a further fine periodic structure which includes plural dielectric plates with a particular thickness and a particular refractive index which is periodically arranged in a particular fine period in addition to the first fine periodic structure and the second fine periodic structure, similar relations are applied.

In the optical element according to the second embodiment of the present invention, preferably, the first refractive index and the second refractive index are identical to each other.

When the first refractive index and the second refractive index are identical to each other, the first fine periodic structure and the second fine periodic structure can be formed of one common material. Therefore, the optical element according to the second embodiment of the present invention can be manufactured more easily and more inexpensively.

In the optical element according to the second embodiment of the present invention, preferably, the first refractive index and the second refractive index are different from each other.

When the first refractive index and the second refractive indexes are different from each other, both the first refractive index and the second refractive indexes can be selected appropriately. Therefore, the dielectric material of the first dielectric plate and the dielectric material of the second dielectric plate can be selected separately and the degree of freedom of a design of an optical element according to the second embodiment of the present invention is improved. Therefore, there can be more easily provided an optical element capable of providing a phase difference in a predetermined range thereof between the first polarization component of light and the second polarization component of the light which is orthogonal to the first polarization component, over a wider range of light wavelength.

Also, since both the first refractive index and the second refractive index can be selected appropriately, a dielectric material which is suitable for the manufacture of plural first dielectric plates and a dielectric material which is suitable for the manufacture of plural second dielectric plates can be selected. Therefore, an optical element according to the second embodiment of the present invention can be manufactured more easily and more inexpensively.

Furthermore, when the first refractive index and/or the second refractive index are/is increased, the depth of the first dielectric plate and/or the depth of the second dielectric plate can be decreased. Therefore, it becomes possible to decrease the thickness of the optical element and it further becomes easy to manufacture the optical element.

In the optical element according to the second embodiment of the present invention, preferably, at least one of the material of the first fine periodic structure and the material of the second fine periodic structure is an inorganic material.

When at least one of the material of the first fine periodic structure and the material of the second fine periodic structure is an inorganic material, the heat resistance and durability of the optical element according to the second embodiment of the present invention which includes the first fine periodic structure and the second fine periodic structure, can be improved by employing an inorganic material with a high heat resistance. Therefore, the heat-caused deterioration and aged deterioration of the optical element according to the second embodiment of the present invention can be suppressed so as to improve the reliability of the optical element according to the second embodiment of the present invention. For example, even though the optical element is placed in a heat-generating environment such as an image projecting apparatus which uses a high-power lamp, the reliability of the optical element can be improved. For such an inorganic material, for example, glasses and titanium oxide (TiO₂) can be provided.

The optical element according to the second embodiment of the present invention, preferably, further includes a substrate provided between the first fine periodic structure and the second fine periodic structure.

The materials of a substrate, the refractive index of a substrate and the shape of a substrate are not particularly limited as long as light can pass the substrate. The substrate may be substrate having a shape of plate. Also, the thickness of a substrate is not particularly limited as long as light can pass the substrate.

When the optical element according to the second embodiment of the present invention further includes a substrate provided between the first fine periodic structure and the second fine periodic structure, both the first refractive index and the second refractive indexes can be selected appropriately. Therefore, the dielectric material of the first dielectric plate and the dielectric material of the second dielectric plate can be selected separately and the degree of freedom of a design of an optical element according to the second embodiment of the present invention is improved. Therefore, there can be more easily provided an optical element capable of providing a phase difference in a predetermined range thereof between the first polarization component of light and the second polarization component of the light which is orthogonal to the first polarization component, over a wider range of light wavelength.

Additionally, since both the first refractive index and the second refractive index can be selected appropriately, the dielectric material which is suitable for the manufacture of plural first dielectric plates and the dielectric material which is suitable for the manufacture of the plural second dielectric plate can be selected. Therefore, an optical element according to the second embodiment of the present invention can be manufactured more easily and more inexpensively.

Furthermore, when the first refractive index and/or the second refractive index are increased, the depth of the first dielectric plate and/or the depth of the second dielectric plate can be decreased. Therefore, it becomes possible to decrease the thickness of the optical element and it becomes further easy to manufacture the optical element.

In addition, even if it is not easy to directly provide the material of the second fine periodic structure on the material of the first fine periodic structure, an optical elements according to the second embodiment of the present invention can be manufactured more easily which includes the first fine periodic structure and the second fine periodic structure, by providing a substrate of a material whereby both the material of the first fine periodic structure and the material of the second fine periodic structure can be provided well, between the first fine periodic structure and the second fine periodic structure.

Also, when the thermal expansion coefficient of a material of the first fine periodic structure differs substantially from the thermal expansion coefficient of a material of the second fine periodic structure, the heat resistance of an optical element according to the second embodiment of the present invention can be improved by providing a substrate composed of a material with a thermal expansion coefficient between the thermal expansion coefficient of a material of the first fine periodic structure and the thermal expansion coefficient of a material of the second fine periodic structure, between the first fine periodic structure and the second fine periodic structure.

In the optical element according to the second embodiment of the present invention, preferably, the material of the substrate is an inorganic material.

When the material of a substrate is an inorganic material, the heat resistance and durability of the optical element according to the second embodiment of the present invention which includes a substrate can be improved by using an inorganic material with a high heat resistance. Therefore, the heat-caused deterioration and aged deterioration of the optical element according to the second embodiment of the present invention can be suppressed so as to improve the reliability of the optical element according to the second embodiment of the present invention. For example, even if the optical element is placed in a heat-generating environment such as an image projecting apparatus which uses a high-power lamp, the reliability of an optical element can be improved. For such an inorganic material, for example, glasses and titanium oxide (TiO₂) can be provided.

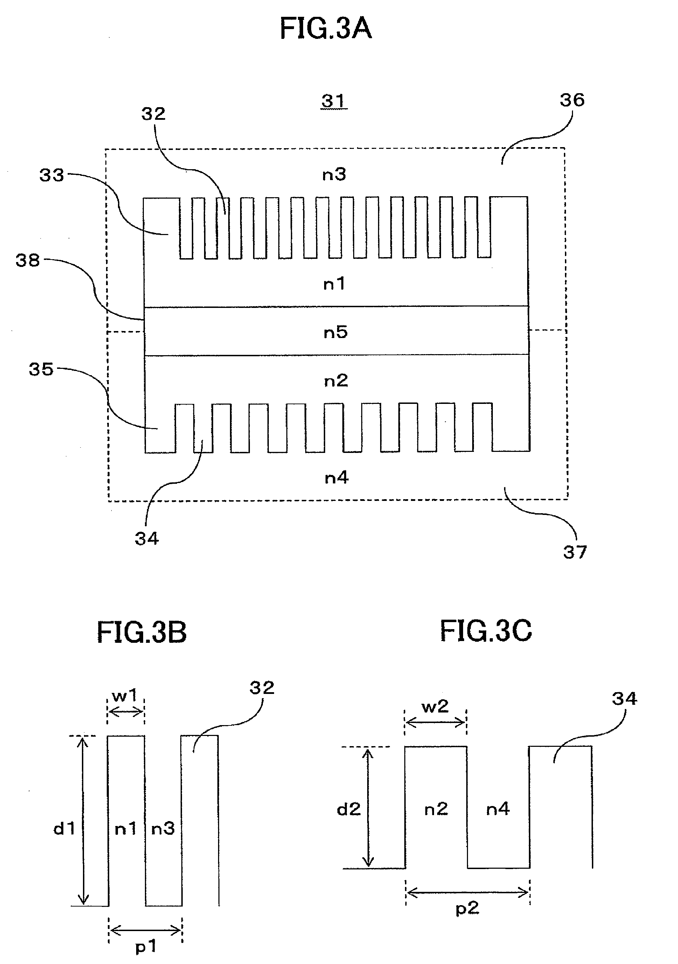

FIG. 3 is a diagram showing a first example of the optical element according to the second embodiment of the present invention. FIG. 3A is a cross section diagram of the first example of the optical element according to the second embodiment of the present invention, FIG. 3B is a cross section diagram of a part of the first fine periodic structure in the first example of the optical element according to the second embodiment of the present invention, and FIG. 3C is a cross section diagram of the second fine periodic structure in the first example of the optical element according to the second embodiment of the present invention.

As shown in FIGs. 3A, 3B and 3C, an optical element 31 which is a first example of the an optical element according to the second embodiment of the present invention has a phase structure for providing a phase difference between the first polarization component of light and the second polarization component of the light which is orthogonal to the first polarization component, wherein the phase structure includes a first fine periodic structure 33 which includes plural first dielectric plates 32 with a first thickness w1, a first depth d1, and a first refractive index n1 which are periodically arranged in a first fine period p1 and a second fine periodic structure 35 which includes plural second dielectric plates 34 with a second thickness w2, a second depth d2, and a second refractive index n2 which are periodically arranged in a second fine period p2, and a refractive index n3 of a medium 36 between the plural first dielectric plates 32 and a refractive index n4 of a medium 37 between the plural second dielectric plates 34 are different from the first refractive index n1 and the second refractive index n2, wherein the first fine period p1 and the second fine period p2, and optionally one or more of the ratio of the first thickness w1 to the first fine period p1 and the ratio of the second thickness w2 to the second fine period p2, and the first refractive index n1 and the second refractive index n2 is different from each other. Additionally, the optical element 31 further includes a substrate 38 with a refractive index n5 on which the first fine periodic structure 33 and the second fine periodic structure 35 are provided. Additionally, the first fine periodic structure 33 faces the second fine periodic structure 35 and the optical axis of the first fine periodic structure 33 coincides with the optical axis of the second fine periodic structure 35.

In the optical element 31, as shown in FIG. 2, the first fine periodic structure 33 can be designed so as to provide a maximum phase difference to light with a first wavelength λ1 and the second fine periodic structure 35 can be designed so as to provide a maximum phase difference to light with a second wavelength λ2 which is different from the first wavelength λ1. Then, when light having the first polarization component and the second polarization component which is orthogonal to the first polarization component is passed through the first fine periodic structure 33 and second fine periodic structure 35 of the optical element 31, the light is provided with a phase difference corresponding to the sum of a phase difference provided by the first fine periodic structure 33 and a phase difference provided by the second fine periodic structure 35 which depend on the wavelength of the light. As a result, a phase difference in a predetermined range thereof can be provided between the first polarization component of light and the second polarization component of the light which is orthogonal to the first polarization component, over a wider range of light wavelength.

As shown in FIG. 2, in the optical element 31, particularly, for light with a wavelength between the first wavelength λ1 and the second wavelength λ2, the first fine periodic structure 33 is a phase structure A for providing a phase difference decreasing with the increase of the wavelength and the second fine periodic structure 35 is a phase structure B for providing a phase difference increasing with the increase of the wavelength. Therefore, the light with a wavelength between the first wavelength λ1 and the second wavelength λ2 is provided with the sum of a phase difference decreasing with the increase of the wavelength which is provided by the first fine periodic structure 33 and a phase difference increasing with the increase of the wavelength which is provided by the second fine periodic structure 35. Accordingly, the optical element 31 can provide a phase difference in a predetermined range thereof between the first polarization component of light and the second polarization component of the light which is orthogonal to the first polarization component, over a wider range of light wavelength between the first wavelength λ1 and the second wavelength λ2.

As shown in FIG. 2, in the optical element 31, preferably, the first fine periodic structure 33 and the second fine periodic structure 35 are designed such that a phase difference provided to light with a third wavelength λ3 between the first wavelength λ1 and the second wavelength λ2, a phase difference provided to light with a fourth wavelength λ4 between the first wavelength λ1 and the second wavelength λ2 which is different from the third wavelength λ3, and a phase difference provided to light with a fifth wavelength λ5 between the third wavelength λ3 and the fourth wavelength λ4 are substantially equal. Additionally, in the optical element 31, preferably, the first fine periodic structure 33 and the second fine periodic structure 35 are designed so as to provide a phase difference which is substantially constant to light with an arbitrary wavelength between the third wavelength λ3 and the fourth wavelength λ4. In these cases, the optical element 31 can provide a phase difference in a predetermined range which includes a design value thereof to light with an arbitrary wavelength between the third wavelength λ3 and the fourth wavelength λ4.

In the optical element 31, the third wavelength λ3 and the fourth wavelength λ4 may be 420 nm and 520 nm, respectively. In this case, the optical element 31 can provide a phase difference in a predetermined range which includes a design value thereof to light with a blue color. The third wavelength λ3 and the fourth wavelength λ4 may be 520 nm and 620 nm, respectively. In this case, the optical element 31 can provide a phase difference in a predetermined range which includes a design value thereof to light with a green color. The third wavelength λ3 and the fourth wavelength λ 4 may be 620 nm and 700 nm, respectively. In this case, the optical element 31 can provide a phase difference in a predetermined range which includes a design value thereof to light with a red color. Furthermore, the third wavelength λ3 and the fourth wavelength λ4 may be 420 nm and 700 nm, respectively. In this case, the optical element 31 can provide a phase difference in a predetermined range which includes a design value thereof to visible light.

In the optical element 31, the first refractive index n1 and the second refractive index n2 may be identical to each other. In this case, the first fine periodic structure 33 and second fine periodic structure 35 can be manufactured by using a common material and the optical element 31 can be manufactured more easily and more inexpensively. Also, in the optical element 31, the first refractive index n1 and the second refractive index n2 may be different from each other. In this case, since each of materials of the first fine periodic structure 33 and second fine periodic structure 35 can be selected, the degree of freedom of the design can be improved and materials which are suitable for the manufacture can be selected. As a result, the optical element 31 can be manufactured more easily and more inexpensively.

In the optical element 31, preferably, at least one of the material of the first fine periodic structure 33 and the material of the second fine periodic structure 35 is an inorganic material. Also, in the optical element 31, preferably, the material of the substrate 38 is an inorganic material. In these cases, the heat resistance of the optical element 31 can be improved.

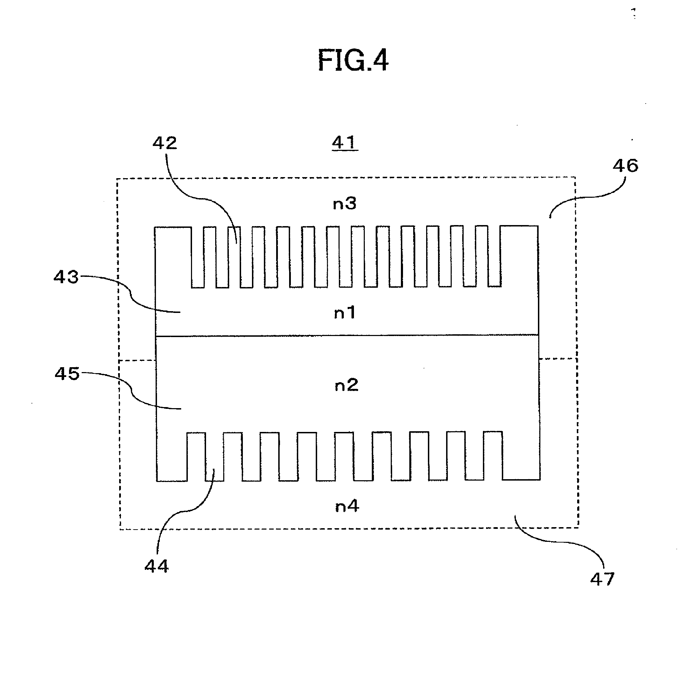

FIG. 4 is a diagram showing a second example of the optical element according to the second embodiment of the present invention.

As shown in FIG. 4, an optical element 41 which is a second example of the an optical element according to the second embodiment of the present invention has a phase structure for providing a phase difference between the first polarization component of light and the second polarization component of the light which is orthogonal to the first polarization component, wherein the phase structure includes a first fine periodic structure 43 which includes plural first dielectric plates 42 with a first thickness, a first depth, and a first refractive index n1 which are periodically arranged in a first fine period and a second fine periodic structure 45 which includes plural second dielectric plates 44 with a second thickness, a second depth, and a second refractive index n2 which are periodically arranged in a second fine period, and a refractive index n3 of a medium 46 between the plural first dielectric plates 42 and a refractive index n4 of a medium 47 between the plural second dielectric plates 44 are different from the first refractive index n1 and the second refractive index n2, wherein at least one of, the first fine period and the second fine period, the ratio of the first thickness to the first fine period and the ratio of the second thickness to the second fine period, and the first refractive index n1 and the second refractive index n2 is different from each other. Additionally, the first fine periodic structure 43 faces the second fine periodic structure 45 and the optical axis of the first fine periodic structure 43 coincides with the optical axis of the second fine periodic structure 45.

In the optical element 41, as shown in FIG. 2, the first fine periodic structure 43 can be designed so as to provide a maximum phase difference to light with a first wavelength λ1 and the second fine periodic structure 45 can be designed so as to provide a maximum phase difference to light with a second wavelength λ2 which is different from the first wavelength λ1. Then, when light having the first polarization component and the second polarization component which is orthogonal to the first polarization component is passed through the first fine periodic structure 43 and second fine periodic structure 45 of the optical element 41, the light is provided with a phase difference corresponding to the sum of a phase difference provided by the first fine periodic structure 43 and a phase difference provided by the second fine periodic structure 45 which depend on the wavelength of the light. As a result, a phase difference in a predetermined range thereof can be provided between the first polarization component of light and the second polarization component of the light which is orthogonal to the first polarization component, over a wider range of light wavelength.

As shown in FIG. 2, in the optical element 41, particularly, for light with a wavelength between the first wavelength λ1 and the second wavelength λ2, the first fine periodic structure 43 is a phase structure A for providing a phase difference decreasing with the increase of the wavelength and the second fine periodic structure 45 is a phase structure B for providing a phase difference increasing with the increase of the wavelength. Therefore, the light with a wavelength between the first wavelength λ1 and the second wavelength λ2 is provided with the sum of a phase difference decreasing with the increase of the wavelength which is provided by the first fine periodic structure 43 and a phase difference increasing with the increase of the wavelength which is provided by the second fine periodic structure 45. Accordingly, the optical element 41 can provide a phase difference in a predetermined range thereof between the first polarization component of light and the second polarization component of the light which is orthogonal to the first polarization component, over a wider range of light wavelength between the first wavelength λ1 and the second wavelength λ2.

As shown in FIG. 2, in the optical element 41, preferably, the first fine periodic structure 43 and the second fine periodic structure 45 are designed such that a phase difference provided to light with a third wavelength λ3 between the first wavelength λ1 and the second wavelength λ2, a phase difference provided to light with a fourth wavelength λ4 between the first wavelength λ1 and the second wavelength λ2 which is different from the third wavelength λ3, and a phase difference provided to light with a fifth wavelength λ5 between the third wavelength λ3 and the fourth wavelength λ4 are substantially equal. Additionally, in the optical element 41, preferably, the first fine periodic structure 43 and the second fine periodic structure 45 are designed so as to provide a phase difference which is substantially constant to light with an arbitrary wavelength between the third wavelength λ3 and the fourth wavelength λ4. In these cases, the optical element 41 can provide a phase difference in a predetermined range which includes a design value thereof to light with an arbitrary wavelength between the third wavelength λ3 and the fourth wavelength λ4.

In the optical element 41, the third wavelength λ3 and the fourth wavelength λ4 may be 420 nm and 520 nm, respectively. In this case, the optical element 41 can provide a phase difference in a predetermined range which includes a design value thereof to light with a blue color. The third wavelength λ3 and the fourth wavelength λ4 may be 520 nm and 620 nm, respectively. In this case, the optical element 41 can provide a phase difference in a predetermined range which includes a design value thereof to light with a green color. The third wavelength λ3 and the fourth wavelength λ 4 may be 620 nm and 700 nm, respectively. In this case, the optical element 41 can provide a phase difference in a predetermined range which includes a design value thereof to light with a red color. Furthermore, the third wavelength λ3 and the fourth wavelength λ4 may be 420 nm and 700 nm, respectively. In this case, the optical element 41 can provide a phase difference in a predetermined range which includes a design value thereof to visible light.

In the optical element 41, the first refractive index n1 and the second refractive index n2 are different from each other. Therefore, each of materials of the first fine periodic structure 43 and second fine periodic structure 45 can be selected, so that the degree of freedom of the design can be improved and materials which are suitable for the manufacture can be selected. As a result, the optical element 41 can be manufactured more easily and more inexpensively.

In the optical element 41, preferably, at least one of the material of the first fine periodic structure 43 and the material of the second fine periodic structure 45 is an inorganic material. In these cases, the heat resistance of the optical element 41 can be improved.

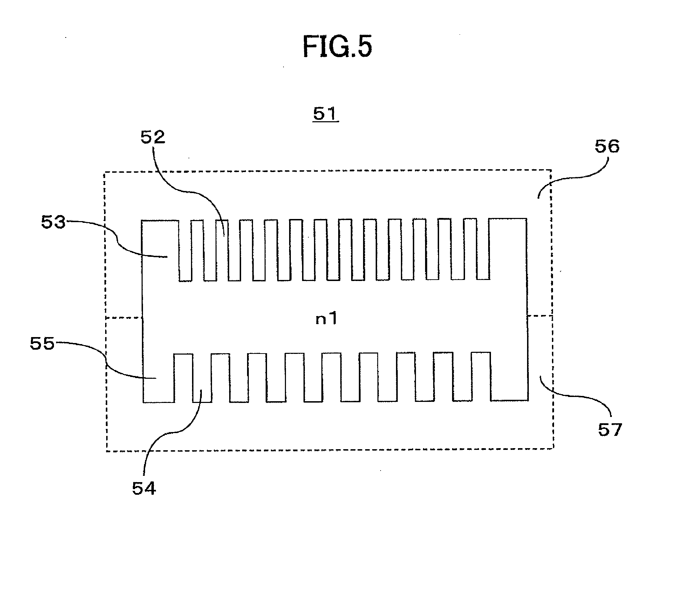

FIG. 5 is a diagram showing a third example of the optical element according to the second embodiment of the present invention.

As shown in FIG. 5, an optical element 51 which is a third example of the an optical element according to the second embodiment of the present invention has a phase structure for providing a phase difference between the first polarization component of light and the second polarization component of the light which is orthogonal to the first polarization component, wherein the phase structure includes a first fine periodic structure 53 which includes plural first dielectric plates 52 with a first thickness, a first depth, and a first refractive index n1 which are periodically arranged in a first fine period and a second fine periodic structure 55 which includes plural second dielectric plates 54 with a second thickness, a second depth, and a second refractive index n1 which are periodically arranged in a second fine period, and a refractive index of a medium 56 between the plural first dielectric plates 52 and a refractive index of a medium 57 between the plural second dielectric plates 54 are different from the first refractive index n1 and the second refractive index n1, wherein at least one of, the first fine period and the second fine period, and the ratio of the first thickness to the first fine period and the ratio of the second thickness to the second fine period is different from each other. Additionally, in the optical element 51, the first fine periodic structure 53 which includes plural first dielectric plates 52 and the second fine periodic structure 55 which includes plural second dielectric plates 54 are formed of a common dielectric material and the first refractive index and the second refractive index are identical. Also, the first fine periodic structure 53 faces the second fine periodic structure 55 and the optical axis of the first fine periodic structure 53 coincides with the optical axis of the second fine periodic structure 55.

In the optical element 51, as shown in FIG. 2, the first fine periodic structure 53 can be designed so as to provide a maximum phase difference to light with a first wavelength λ1 and the second fine periodic structure 55 can be designed so as to provide a maximum phase difference to light with a second wavelength λ2 which is different from the first wavelength λ1. Then, when light having the first polarization component and the second polarization component which is orthogonal to the first polarization component is passed through the first fine periodic structure 53 and second fine periodic structure 55 of the optical element 51, the light is provided with a phase difference corresponding to the sum of a phase difference provided by the first fine periodic structure 53 and a phase difference provided by the second fine periodic structure 55 which depend on the wavelength of the light. As a result, a phase difference in a predetermined range thereof can be provided between the first polarization component of light and the second polarization component of the light which is orthogonal to the first polarization component, over a wider range of light wavelength.

As shown in FIG. 2, in the optical element 51, particularly, for light with a wavelength between the first wavelength λ1 and the second wavelength λ2, the first fine periodic structure 53 is a phase structure A for providing a phase difference decreasing with the increase of the wavelength and the second fine periodic structure 55 is a phase structure B for providing a phase difference increasing with the increase of the wavelength. Therefore, the light with a wavelength between the first wavelength λ1 and the second wavelength λ2 is provided with the sum of a phase difference decreasing with the increase of the wavelength which is provided by the first fine periodic structure 53 and a phase difference increasing with the increase of the wavelength which is provided by the second fine periodic structure 55. Accordingly, the optical element 51 can provide a phase difference in a predetermined range thereof between the first polarization component of light and the second polarization component of the light which is orthogonal to the first polarization component, over a wider range of light wavelength between the first wavelength λ1 and the second wavelength λ2.

As shown in FIG. 2, in the optical element 51, preferably, the first fine periodic structure 53 and the second fine periodic structure 55 are designed such that a phase difference provided to light with a third wavelength λ3 between the first wavelength λ1 and the second wavelength λ2, a phase difference provided to light with a fourth wavelength λ4 between the first wavelength λ1 and the second wavelength λ2 which is different from the third wavelength λ3, and a phase difference provided to light with a fifth wavelength λ5 between the third wavelength λ3 and the fourth wavelength λ4 are substantially equal. Also, in the optical element 51, preferably, the first fine periodic structure 53 and the second fine periodic structure 55 are designed so as to provide a phase difference which is substantially constant to light with an arbitrary wavelength between the third wavelength λ3 and the fourth wavelength λ4. In these cases, the optical element 51 can provide a phase difference in a predetermined range which includes a design value thereof to light with an arbitrary wavelength between the third wavelength λ3 and the fourth wavelength λ4.

In the optical element 51, the third wavelength λ3 and the fourth wavelength λ4 may be 420 nm and 520 nm, respectively. In this case, the optical element 51 can provide a phase difference in a predetermined range which includes a design value thereof to light with a blue color. The third wavelength λ3 and the fourth wavelength λ4 may be 520 nm and 620 nm, respectively. In this case, the optical element 51 can provide a phase difference in a predetermined range which includes a design value thereof to light with a green color. The third wavelength λ3 and the fourth wavelength λ 4 may be 620 nm and 700 nm, respectively. In this case, the optical element 51 can provide a phase difference in a predetermined range which includes a design value thereof to light with a red color. Furthermore, the third wavelength λ3 and the fourth wavelength λ4 may be 420 nm and 700 nm, respectively. In this case, the optical element 51 can provide a phase difference in a predetermined range which includes a design value thereof to visible light.

In the optical element 51, since the materials of the first fine periodic structure 53 and second fine periodic structure 55 are common and the first refractive index and the second refractive index are identical, the optical element 51 can be manufactured more easily and more inexpensively.

In the optical element 51, preferably, the material of the first fine periodic structure 53 and second fine periodic structure 55 is an inorganic material. In this case, the heat resistance of the optical element 51 can be improved.

The optical element according to the second embodiment of the present invention can be formed by combining publicly-known techniques such as application of a resist and/or deposition of a thin film and etching.

For example, for a single dielectric material, first, a first fine periodic structure may be formed which includes plural first dielectric plates with a first thickness and a first refractive index which are periodically arranged in a fine period, and then, a second fine periodic structure may be formed which includes plural second dielectric plates with a second thickness and a second refractive index which are periodically arranged in a second fine period.

Also, first, a first dielectric material may be provided with a second dielectric material which is different from the first dielectric material by a suitable method such as sputtering, and then, a first fine periodic structure which includes plural first dielectric plates with a first thickness and a first refractive index which are periodically arranged in a first fine period may be formed on the first dielectric material and a second fine periodic structure which includes plural second dielectric plates with a second thickness and a second refractive index which are periodically arranged in a second fine period may be formed on the second dielectric material. Also, first, a first dielectric material and a second dielectric material which is different from the first dielectric material may be provided on a substrate by a suitable method such as sputtering, and then, a first fine periodic structure which includes plural first dielectric plates with a first thickness and a first refractive index which are periodically arranged in a first fine period may be formed on the first dielectric material and a second fine periodic structure which includes plural second dielectric plates with a second thickness and a second refractive index which are periodically arranged in a second fine period may be formed on the second dielectric material. Herein, a publicly-known technique such as application of a resist and/or deposition of a thin film and etching is employed in order to form the first fine periodic structure which includes plural first dielectric plates with a first thickness and a first refractive index which are periodically arranged in a first fine period and a second fine periodic structure which includes plural second dielectric plates with a second thickness and a second refractive index which are periodically arranged in a second fine period.

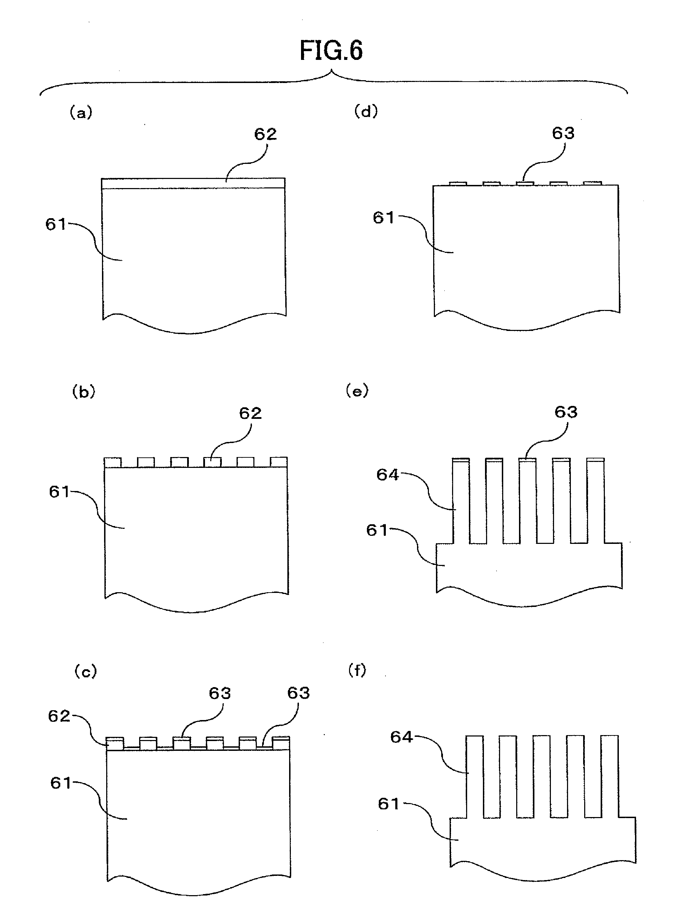

FIG. 6(a)-(f) is a diagram illustrating an example of a method of manufacturing an optical element according to the second embodiment of the present invention.

First, as shown in FIG. 6(a), a resist 62 (such as photoresists and electron-beam resists) is applied on a part of a dielectric material 61 (for example, one side of a first substrate made of a glass, etc.). The position at which a resist 62 is applied in a dielectric material 61 is a location where a fine periodic structure is formed. The dielectric materials 61 need be a dielectric material whereby light incident on the optical element can pass through the optical element, and preferably, is an inorganic material, wherein, for example, a glass whose refractive index n_{d} for d - line is 1.47 can be used.

Next, as shown in FIG. 6 (b), a pattern in the fine period of a fine periodic structure formed on the dielectric material 61 is formed on the resist 62 applied to a part of the dielectric material 61. The formation of a pattern in the fine period of a fine periodic structure on the resist is conducted by means of, for example, irradiation of electromagnetic waves such as extremely-short ultraviolet rays, vacuum ultraviolet rays, and X-rays or direct irradiation of electron beams via a mask corresponding to a pattern of the fine period of a fine period structure or by an imprint method, depending on the kind of the resist. In order to improve the rate of production of an optical element, preferable is irradiation of electromagnetic waves such as extremely-short ultraviolet rays, vacuum ultraviolet rays, and X-rays via a mask corresponding to a pattern of the fine period of a fine period structure, for which an exposure device is used. Then, the resist 62 on which a pattern of the fine period of a fine period structure is formed is developed. Herein, the development of the resist 62 is conducted such that the resist 62 remains at a location on the dielectric material 61 at which no dielectric plate of a fine period stricture is formed (the resist 62 is removed at a location at which a dielectric plate of a fine period structure is formed).

Next, as shown in FIG. 6(c), a metal film 63 is deposited on the whole of a part of the dielectric material 61 on which part the resist 62 is removed and the resist 62 remaining on the dielectric material 61, for example, by a vacuum-deposition method.

Next, a shown in FIG. 6(d), the resist 62 remaining on the dielectric material 61 and the metal film 63 formed on the resist 62 are removed by a lift-off method which uses a resist removing liquid. Accordingly, the metal film 63 remains on the dielectric material 61 at a location at which a dielectric plate of a fine period structure is formed.

Next, as shown in FIG. 6 (e), the dielectric material 61, wherein the metal film 63 remains on a location where a dielectric plate of a fine period structure is formed, is dry-etched, for example, by using a fluorocarbon gas such as CF₄, C₄F₈, and CHF₃. Additionally, dry-etching can not only be conducted by using an ECR (Electron Cyclotron Resonance) etching apparatus but can be also conducted by using another etching apparatus such as an ICP (Inductively Coupled Plasma) etching apparatus. Herein, the location of the dielectric material 61 on which the metal film 63 remains is not subjected to etching but is protected by the metal film 63. On the other hand, the location of the dielectric material 61 on which the metal film 63 does not remain is subjected to etching. Accordingly, a dielectric plate 64 of a fine period structure is formed on the dielectric material 61 at a location the metal film 63 remains. Also, a space between dielectric plates 64 of a fine period structure is formed on the dielectric material 61 at a location where the metal film 63 does not remain.

Next, as shown in FIG. 6 (f), the metal film 63 remaining on the dielectric plate 64 of a fine period structure is removed. Thus, a fine period structure can be formed in which a desired dielectric plate 64 is formed on the dielectric material 61.

A first fine period structure in which one part of a dielectric material is provided with a first dielectric plate can be formed by applying processes shown in FIG. 6(a) - (f) to one part of a dielectric material, and further, a second fine period structure in which another part of a dielectric material is provided with a second dielectric plate can be formed by applying processes shown in FIG. 6(a) - (f) to another part of a dielectric material, whereby an optical element according to the second embodiment of the present invention can be formed.

Also, after a first dielectric material is provided with a second dielectric material which is different from the first dielectric material or after a first dielectric material and a second dielectric material are provided on a substrate, by using, for example, a sputtering method, a first fine period structure in which a first dielectric material is provided with a first dielectric plate can be formed by applying processes shown in FIG. 6(a) - (f) to a first dielectric material, and further, a second fine period structure in which a second dielectric material is provided with a second dielectric plate can be formed by applying processes shown in FIG. 6(a) - (f) to a second dielectric material, whereby an optical element according to the second embodiment of the present invention can be formed.

When the first fine periodic structure and the second fine periodic structure are formed, the directions of the optical axis of the first fine periodic structure (along the direction of travel of light passing through the first fine periodic structure) need be aligned with the directions of the optical axis of the second fine periodic structure (along the direction of travel of light passing through the second fine periodic structure) but it is not required to align the first fine periodic structure and the second fine periodic structure with directions perpendicular to the directions of the optical axis of the first fine periodic structure and the directions of the optical axis of the second fine periodic structure.

In the optical element according to the first embodiment of the present invention or the optical element according to the second embodiment of the present invention, preferably, the phase difference is substantially (1/4) × 2π.

Herein, a phase difference being substantially (1/4) × 2π means that a phase difference provided between the first polarization component of light and the second polarization component of the light which is orthogonal to the first polarization component is completely (1/4) × 2π (radian) or the deviation of a phase difference provided between the first polarization component of light and the second polarization component of the light which is orthogonal to the first polarization component from (1/4) × 2π (radian) can be generally ignored with respect to the required performance of the optical element.

In this case, there can be provided an optical element capable of providing a phase difference of substantially (1/4) × 2π (radian) between the first polarization component of light and the second polarization component of the light which is orthogonal to the first polarization component, over a wider range of light wavelength. Therefore, when the light is linearly-polarized light, the linearly-polarized light can be converted into circularly-polarized light over a wider range of light wavelength. On the other hand, when the light is circularly-polarized light, the circularly-polarized light can be converted into linearly-polarized light over a wider range of light wavelength. Such an optical element is, for example, a quarter-wave plate.

Also, in the optical element according to the second embodiment of the present invention, when the phase difference is (1/4) × 2π (radian), the sum of the depth of the first dielectric plate and the depth of the second dielectric plate is approximately 1/4 of the wavelength of light. Therefore, it is possible to make an optical element according to the second embodiment of the present invention be an thinner element than the phase difference plate disclosed in Japanese Patent Application Publication No. 10-068816.

In the optical element according to the first embodiment of the present invention or the optical element according to the second embodiment of the present invention, preferably, the phase difference is substantially (1/2) × 2π.

Herein, a phase difference being substantially (1/2) × 2π means that a phase difference provided between the first polarization component of light and the second polarization component of the light which is orthogonal to the first polarization component is completely (1/2) × 2π (radian) or the deviation of a phase difference provided between the first polarization component of light and the second polarization component of the light which is orthogonal to the first polarization component from (1/2) × 2π (radian) can be generally ignored with respect to the required performance of the optical element.

In this case, there can be provided an optical element capable of providing a phase difference of substantially (1/2) × 2π (radian) between the first polarization component of light and the second polarization component of the light which is orthogonal to the first polarization component, over a wider range of light wavelength. Therefore, when the light is linearly-polarized light, the directions of polarization of linearly-polarized light (directions along a vibration plane of the electric field of linearly-polarized light) can be changed over a wider range of light wavelength. For example, while p-polarized light can be converted into S-polarized light, S-polarized light can be converted into P-polarized light. Also, when the light is circularly-polarized light, the rotational direction of the circularly-polarized light (rotational direction of a vibration plane of the electric field of circularly-polarized light) can be inverted over a wider range of light wavelength. Such an optical element is, for example, a half-wave plate.

Preferably, the optical element according to the first embodiment of the present invention or the optical element according to the second embodiment of the present invention further includes a polarized-light separation structure configured to separate the first polarization component and the second polarization component.

In the optical element according to the first embodiment of the present invention or the optical element according to the second embodiment of the present invention, when the phase difference is substantially (1/2) × 2π and a polarized-light separation structure configured to separate the first polarization component and the second polarization component is further included, light which includes a first polarization component and a second polarization component is separated into the first polarization component and the second polarization component by the polarized-light separation structure, and further, a phase difference of substantially (1/2) × 2π is provided between the first polarization component of light and the second polarization component of the light which is orthogonal to the first polarization component, whereby one of the first polarization component and second polarization component can be converted into the other of the first polarization component and second polarization component. That is, the optical element according to the first embodiment of the present invention or the optical element according to the second embodiment of the present invention may be a polarized-light conversion element which can separate a first polarization component and second polarization component of light and convert one of the first polarization component and second polarization component into the other of the first polarization component and second polarization component. For example, light which includes P-polarized light and S-polarized light is separated from each other by the polarized-light separation structure, and further, a phase difference of 1/2 × 2π is provided between P-polarized light and S-polarized light, whereby P-polarized can be converted into S-polarized light or S-polarized light can be converted into P-polarized light.

Herein, the polarized-light separation structure may have a face which transmits one of the first polarization component and second polarization component and reflects the other of the first polarization component and second polarization component. As a polarized-light separation structure, for example, a publicly-known polarized light separation element such as a polarization beam splitter and a polarizing prism array can be provided.

Thus, in the optical element according to the first embodiment of the present invention or the optical element according to the second embodiment of the present invention, when a phase difference is substantially (1/2) × 2π and a polarized-light separation structure configured to separate the first polarization component and the second polarization component is further included, the first polarization component and second polarization component of light can be separated and one of the first polarization component and second polarization component can be converted into the other of the first polarization component and second polarization component (a polarized-light separation element can be provided), over a wider range of light wavelength.

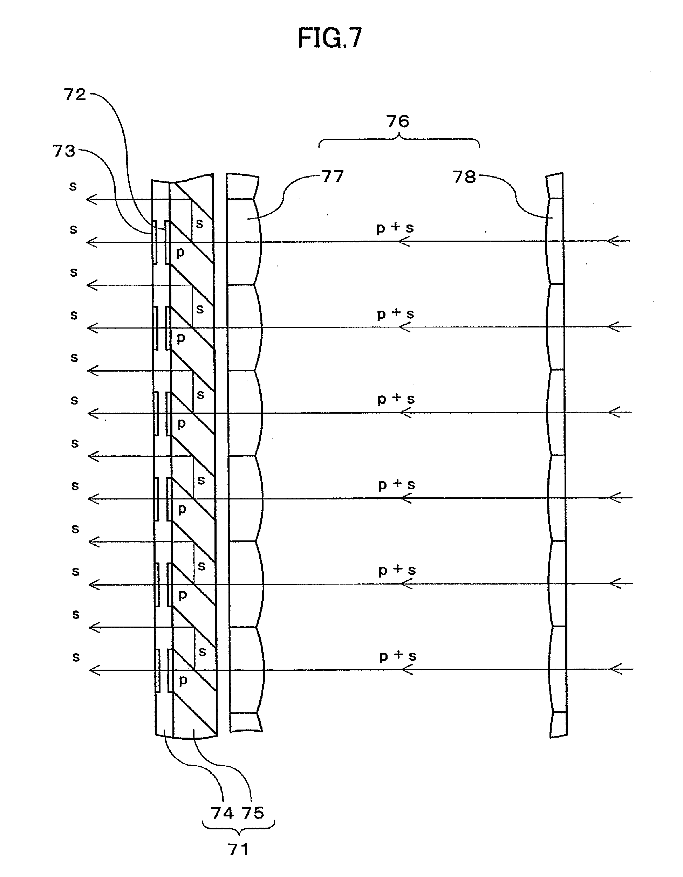

FIG.7 is a diagram showing an example of the optical element according to the second embodiment of the present invention which includes a polarized-light separation structure.

As shown in FIG. 7, an optical element 71 which is an example of the optical element according to the second embodiment of the present invention which includes a polarized-light separation structure includes plural first fine periodic structures 72, plural second fine periodic structures 73 provided so as to face the plural first fine periodic structures 72, a substrate 74 provided between the plural first fine periodic structures 72 and the plural second fine periodic structures 73, and a polarizing prism array 75 as a polarized-light separation structure. Herein, the polarizing prism array 75 as a polarized-light separation structure has a face which transmits P-polarized light and reflects S-polarized light. Also, the plural first fine periodic structures 72, the plural second fine periodic structures 73 and the substrate 74 function as a half wave plate which provides a phase difference of (1/2) × 2π between P-polarized light and S-polarized light.

As shown in FIG. 7, non-polarized light (which includes both p-polarized light and S-polarized light) incident on the polarizing prism array 75 of the optical element 71 is separated into P-polarized light and S-polarized light by a face of the polarizing prism array 75 which transmits P-polarized light and reflects S-polarized light. Then, the P-polarized light separated by the polarizing prism array 75 passes through the plural first fine periodic structures 72, the substrate 74 and the plural second fine periodic structures 73, and is provided with a phase difference of (1/2) × 2π by the plural first fine periodic structures 72 and the plural second fine periodic structures 73. As a result, the P-polarized light which passes through the plural first fine periodic structures 72 and the plural second fine periodic structures 73, the directions of whose polarization are just rotated by 90°, is converted into S-polarized light. Thus, the P-polarized light separated by the polarizing prism array 75 is converted into S-polarized light, which emits from the optical element 71.

On the other hand, the S-polarized light separated by the polarizing prism array 75 is reflected from an adjacent face which transmits P-polarized light and reflects S-polarized light to the same direction as that of the P-polarized light separated by the polarizing prism array 75. Then, the reflected S-polarized light does not pass through the plural first fine periodic structures 72 and the plural second fine periodic structures 73 but only passes through the substrate 74 and emits from the optical element 71 as S-polarized light without a change.

Thus, all of the non-polarized light incident on the optical element 71 can be converted into S-polarized light.

Additionally, when the non-polarized light incident on the optical element 71 is white light, it is preferable that the plural first fine periodic structures 72 and the second fine periodic structures 73 are designed so as to provide a phase difference of (1/2) × 2π for all the wavelength of visible light.

Additionally, as shown in FIG. 7, the optical element 71 may be used in combination with an optical integrator 76. The optical integrator 76 may be a fly-eye lens, an array of plural rod lenses, and an array of plural rectangular lenses 77 or 78. For example, the optical integrator 76 mixes non-polarized light generated by a light source such as a high pressure mercury lamp and emits light with a uniform quantity thereof. The quantity of image light projected by an image projecting apparatus can be uniformed by using the optical element 71 and the optical integrator 76 in the image projecting apparatus.

### [Third embodiment]

The invention according to the third embodiment of the present invention is an image projecting apparatus which projects an image onto a display surface on which an image is displayed, wherein an optical element according to the first embodiment of the present invention or an optical element according to the second embodiment of the present invention is included. Herein, an image projecting apparatus is also referred to as an image projection apparatus or a projector.

According to the third embodiment of the present invention, an image projecting apparatus can be provided which includes an optical element capable of providing a phase difference in a predetermined range thereof between the first polarization component of light and the second polarization component of the light which is orthogonal to the first polarization component, over a wider range of light wavelength.

Particularly, in the optical element according to the first embodiment of the present invention or the optical element according to the second embodiment of the present invention which is included in an image projecting apparatus according to the third embodiment of the present invention, when the phase difference is substantially (1/2) × 2π, a phase difference which is substantially (1/2) × 2π is provided between the first polarization component of light and the second polarization component of the light which is orthogonal to the first polarization component, over a wider range of light wavelength, whereby one of the first polarization component and second polarization component can be converted into the other of the first polarization component and second polarization component. Then, since an image can be projected onto a display surface on which an image is displayed, by utilizing only one of the first polarization component and second polarization component over a wider range of light wavelength, there can be provided an image projecting apparatus capable of utilizing light with higher efficiency and projecting an image with a higher brightness onto the display surface.

Also particularly, in the optical element according to the first embodiment of the present invention or the optical element according to the second embodiment of the present invention which is included in an image projecting apparatus according to the third embodiment of the present invention, when at least one of the material of the first fine periodic structure and the material of the second fine periodic structure is an inorganic material, the heat resistance of the first fine periodic structure and second fine periodic structure, therefore, the heat resistance of the optical element, can be improved, whereby there can be provided an image projecting apparatus having a higher reliability against heat generated in the image projecting apparatus.

For example, the image projecting apparatus according to an embodiment of the third of the present invention may be an image projecting apparatus (liquid crystal projector) which irradiate a liquid crystal display device with light generated from a light source and projects an image displayed on the liquid crystal display device onto a display surface via a projection lens.

An image projecting apparatus according to the third embodiment of the present invention includes at least one optical element according to the first embodiment of the present invention or at least one optical element according to the second embodiment of the present invention, wherein the optical element may be a half-wave plate which provides a phase difference of (1/2) × 2π between the first polarization component and the second polarization component over a wider range of light wavelength or may be a polarized-light conversion element which converts one of the first polarization component and second polarization component into the other of the first polarization component and second polarization component by separating the first polarization component and second polarization component of light and providing a phase difference of (1/2) × 2π between the first polarization component and second polarization component of light, or may be both of them. Additionally, at least one optical element according to the first embodiment of the present invention or at least one optical element according to the second embodiment of the present invention may be arranged in an optical path between the light source and the liquid crystal display device. Also, the wider range of light wavelength may be a wavelength range which corresponds to each of a blue color, a green color, and a red color, and desirably, the range of visible light.

Furthermore, for example, the image projecting apparatus according to the third embodiment of the present invention may be a transmission-type or reflection-type image projecting apparatus, which includes a light source, a separation optical system which separates light generated from the light source into red light, green light and blue light, three transmission-type or reflection-type liquid crystal elements which are irradiated with each of red light, green light and blue light and emits each of red image light, green image light and blue image light, an optical combining element which combines the red image light, green image light and blue image light which are emitted from the three transmission-type or reflection-type liquid crystal element so as to emit combined-image light, and a projection optical system which projects the combined-image light.

Herein, the optical element according to the first embodiment of the present invention or the optical element according to the second embodiment of the present invention may be a half-wave plate which provides a phase difference of (1/2) × 2π between the first polarization component and second polarization component of light over a wider range of light wavelength and is arranged in an optical path between the transmission-type or reflection-type liquid crystal display device and the optical combining element.

Additionally, the wider range of light wavelength may be a wavelength range which corresponds to each of a blue color, a green color and a red color, and desirably, the range of visible light. That is, the optical element according to the first embodiment of the present invention or the optical element according to the second embodiment of the present invention may be a half-wave plate for each of blue, green and red colors which provides a phase difference of (1/2) × 2π between the first polarization component and second polarization component of light over a wider range of light wavelength of each of blue, green and red colors, and may be arranged in an optical path between each of transmission-type or reflection-type liquid crystal display devices for each of blue, green and red colors and the optical combining element. However, the optical element according to the first embodiment of the present invention or the optical element according to the second embodiment of the present invention may be a half-wave plate for visible light which provides a phase difference of (1/2) × 2π between the first polarization component and second polarization component of light over a wider range of wavelength of visible light, and may be arranged in an optical path between each of transmission-type or reflection-type liquid crystal display devices for each of blue, green and red colors and the optical combining element. In this case, one kind of half-wave plate for visible light is arranged in an optical path between each of transmission-type or reflection-type liquid crystal display devices for each of blue, green and red colors and the optical combining element, and three half-wave plates can be common ones.

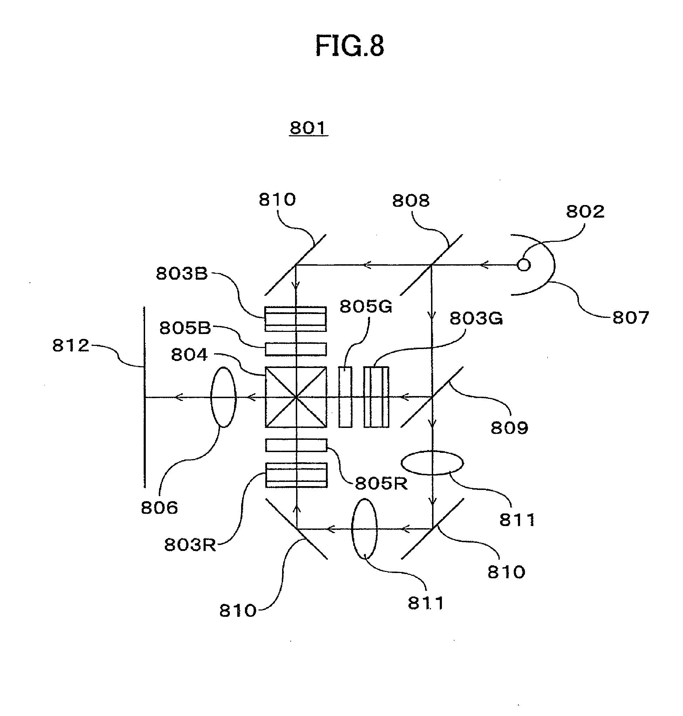

FIG. 8 is a diagram showing a first example of the image projecting apparatus according to the third embodiment of the present invention. The first example of the image projecting apparatus according to the third embodiment of the present invention shown in FIG. 8 is a transmission-type image projecting apparatus.

A transmission-type image projecting apparatus 801 mainly includes a light source 802 such as a high pressure mercury lamp, transmission-type liquid crystal display elements for a blue color, a green color and a red color 803B, 803G and 803R for separately form images corresponding to a blue color, a green color, and a red color, respectively, an optical combining element 804 (which is also referred to as a cross prism or an X cube) for combining blue image light, green image light and red image light which are emitted from three transmission-type liquid crystal display elements 803B, 803G and 803R, half-wave plates 805B, 805G and 805R for three wavelengths as the optical elements according to the first embodiment of the present invention or the second embodiment of the present invention, each of which is arranged between each of the three transmission-type liquid crystal display elements 803B, 803G and 803R and the optical combining element 804, and a projection lens 806 for magnifying image light combined by the optical combining element 804 and projecting it onto a screen 812 as a display surface. Herein, the half-wave plates 805B, 805G and 805R for three wavelengths may be a half-wave plate for a blue color, a half-wave plate for a green color, and a half-wave plate for a red color, respectively, or all of them may be single-kind of wave plates for visible light. In addition, the transmission-type image projecting apparatus 801 includes a reflector 807 for reflecting a portion of light generated from the light source 802, a first color-separating dichroic mirror 808 for separating blue light and green and red light, a second color-separating dichroic mirror 809 for separating green light and red light, a total reflection mirror 810, and a relay lens 811.

A portion of non-polarized white light (including P-polarized light and S-polarized light) generated from the light source 802 is directly incident on the first color-separating dichroic mirror 808 and another portion of the non-polarized white light generated from the light source 802 is reflected from the reflector 807 and is incident on the first color-separating dichroic mirror 808.

Non-polarized blue light included in the non-polarized white light incident on the first color-separating dichroic mirror 808 is transmitted through the first color-separating dichroic mirror 808, is reflected from the total reflection mirror 810, and passes through the transmission-type liquid crystal display element for a blue color 803B. Herein, the transmission-type liquid crystal display element for a blue color 803B has two polarization parts for selecting S-polarized blue light from non-polarized blue light including P-polarized light and S-polarized light and a liquid crystal part for modulating S-polarized blue light which is sandwiched between the two polarization parts. Therefore, the non-polarized blue light incident on the transmission-type liquid crystal display element for a blue color 803B is modulated into S-polarized blue image light by the transmission-type liquid crystal display element for a blue color 803B. The S-polarized blue image light emitted from the transmission-type liquid crystal display element for a blue color 803B is incident on the half-wave plate for a blue color 805B and is converted into P-polarized blue image light. Then, the P-polarized blue image light is incident on the optical combining element 804.

On the other hand, non-polarized green light and non-polarized red light which are included in non-polarized white light incident on the first color-separating dichroic mirror 808 are reflected from the first color-separating dichroic mirror 808 and are incident on the second color-separating dichroic mirror 809. Non-polarized green light incident on the second color separating dichroic mirror 809 is reflected from the second color-separating dichroic mirror 809 and passes through the transmission-type liquid crystal display element for a green color 803G. Herein, the transmission-type liquid crystal display element for a green color 803G has two polarization parts for selecting S-polarized green light from non-polarized green light including P-polarized light and S-polarized light and a liquid crystal part for modulating S-polarized green light which is sandwiched between the two polarization parts. Therefore, the non-polarized green light incident on the transmission-type liquid crystal display element for a green color 803G is modulated into S-polarized green image light by the transmission-type liquid crystal display element for a green color 803G. The S-polarized green image light emitted from the transmission-type liquid crystal display element for a green color 803G is incident on the half-wave plate for a green color 805G and is converted into P-polarized green image light. Then, the P-polarized green image light is incident on the optical combining element 804.

Also, the non-polarized red light incident on the second color-separating dichroic mirror 809 is transmitted through the second color-separating dichroic mirror 809 and passes through the transmission-type liquid crystal display element for a red color 803R via the two total reflection mirrors 810 and the two relay lenses 811. Herein, the transmission-type liquid crystal display element for a red color 803R has two polarization parts for selecting S-polarized red light from non-polarized red light including P-polarized light and S-polarized light and a liquid crystal part for modulating S-polarized red light which is sandwiched between the two polarization parts. Therefore, the non-polarized red light incident on the transmission-type liquid crystal display element for a red color 803R is modulated into S-polarized red image light by the transmission-type liquid crystal display element for a red color 803R. The S-polarized red image light emitted from the transmission-type liquid crystal display element for a red color 803R is incident on the half-wave plate for a red color 805R and is converted into P-polarized red image light. Then, the P-polarized red image light is incident on the optical combining element 804.

The P-polarized blue image light, the P-polarized green image light and the P-polarized red image light are combined in the optical combining element 804 and are emitted toward the projection lens 806 as predetermined p-polarized image light. The predetermined p-polarized image light is magnified by the projection lens 806 and is projected onto the screen 812.

Herein, the half-wave plate for a blue color 805B, the half-wave plate for a green color 805G and the half-wave plate for a red color 805R are optical elements according to the first embodiment of the present invention or the second embodiment of the present invention, a phase difference of (1/2) × 2π can be provided between P-polarized light and S-polarized light over a wider range of light wavelength in wavelength ranges of a blue color, a green color and a red color, respectively, wherein the S-polarized light can be converted into the P-polarized light. Thus, since the P-polarized light can be utilized over a wider range of light wavelength in wavelength ranges of a blue color, a green color and a red color, the image projecting apparatus 801 can display an image with a higher brightness on the screen 812.

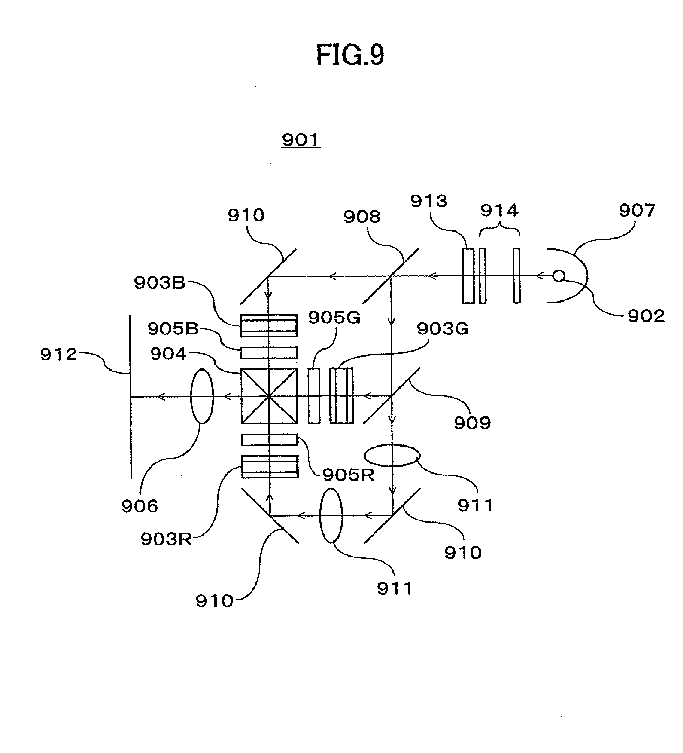

FIG. 9 is a diagram showing a second example of the image projecting apparatus according to the third embodiment of the present invention. The second example of the image projecting apparatus according to the third embodiment of the present invention shown in FIG. 9 is a transmission-type image projecting apparatus, which includes a polarization converting element.

A transmission-type image projecting apparatus 901 mainly includes a light source 902 such as a high pressure mercury lamp, transmission-type liquid crystal display elements for a blue color, a green color and a red color 903B, 903G and 903R for separately form images corresponding to a blue color, a green color, and a red color, respectively, an optical combining element 904 (which is also referred to as a cross prism or an X cube) for combining blue image light, green image light and red image light which are emitted from three transmission-type liquid crystal display elements 903B, 903G and 903R, half-wave plates 905B, 905G and 905R for three wavelengths as the optical elements according to the first embodiment of the present invention or the second embodiment of the present invention, each of which is arranged between each of the three transmission-type liquid crystal display elements 903B, 903G and 903R and the optical combining element 904, and a projection lens 906 for magnifying image light combined by the optical combining element 904 and projecting it onto a screen 912 as a display surface. Herein, the half-wave plates 905B, 905G and 905R for three wavelengths may be a half-wave plate for a blue color, a half-wave plate for a green color, and a half-wave plate for a red color, respectively, or all of them may be single-kind of wave plates for visible light. In addition, the transmission-type image projecting apparatus 901 includes a reflector 907 for reflecting a portion of light generated from the light source 902, a first color-separating dichroic mirror 908 for separating blue light and green and red light, a second color-separating dichroic mirror 909 for separating green light and red light, a total reflection mirror 910, and a relay lens 911. Also, the transmission-type image projecting apparatus 901 includes a polarization converting element 913 for converting non-polarized white light (including P-polarized light and S-polarized light) generated from the light source 902 into, herein, S-polarized light, and an optical integrator 914 for mixing non-polarized white light generated from the light source 902 and irradiating the polarization converting element 913 with a uniformly non-polarized white light. The polarization converting element 913 is a polarization converting element as shown in FIG. 7, which can covert non-polarized white light into S-polarized light over a wider range of light wavelength of visible light (white light).

A portion of non-polarized white light (including P-polarized light and S-polarized light) generated from the light source 902 is directly incident on the optical integrator 914 and another portion of the non-polarized white light generated from the light source 902 is reflected from the reflector 907 and is incident on the optical integrator 914. Non-polarized white light incident on the optical integrator 914 is uniformly mixed and is incident on the polarization converting element 913. The non-polarized white light incident on the polarization converting element 913 is ideally all converted into S-polarized white light. The S-polarized white light emitted from the polarization converting element 913 is incident on the first color-separating dichroic mirror 908.

S-polarized blue light included in the S-polarized white light incident on the first color-separating dichroic mirror 908 is transmitted through the first color-separating dichroic mirror 908, is reflected from the total reflection mirror 910, and passes through the transmission-type liquid crystal display element for a blue color 903B. Herein, the transmission-type liquid crystal display element for a blue color 903B has two polarization parts for transmitting S-polarized blue light and a liquid crystal part for modulating S-polarized blue light which is sandwiched between the two polarization parts. Therefore, the S-polarized blue light incident on the transmission-type liquid crystal display element for a blue color 903B is modulated into S-polarized blue image light by the transmission-type liquid crystal display element for a blue color 903B. The S-polarized blue image light emitted from the transmission-type liquid crystal display element for a blue color 903B is incident on the half-wave plate for a blue color 905B and is converted into P-polarized blue image light. Then, the P-polarized blue image light is incident on the optical combining element 904.

On the other hand, S-polarized green light and S-polarized red light which are included in S-polarized white light incident on the first color-separating dichroic mirror 908 are reflected from the first color-separating dichroic mirror 908 and are incident on the second color-separating dichroic mirror 909. S-polarized green light incident on the second color separating dichroic mirror 909 is reflected from the second color-separating dichroic mirror 909 and passes through the transmission-type liquid crystal display element for a green color 903G. Herein, the transmission-type liquid crystal display element for a green color 903G has two polarization parts for transmitting S-polarized green light and a liquid crystal part for modulating S-polarized green light which is sandwiched between the two polarization parts. Therefore, the S-polarized green light incident on the transmission-type liquid crystal display element for a green color 903G is modulated into S-polarized green image light by the transmission-type liquid crystal display element for a green color 903G. The S-polarized green image light emitted from the transmission-type liquid crystal display element for a green color 903G is incident on the half-wave plate for a green color 905G and is converted into P-polarized green image light. Then, the P-polarized green image light is incident on the optical combining element 904.

Also, the S-polarized red light incident on the second color-separating dichroic mirror 909 is transmitted through the second color-separating dichroic mirror 909 and passes through the transmission-type liquid crystal display element for a red color 903R via the two total reflection mirrors 910 and the two relay lenses 911. Herein, the transmission-type liquid crystal display element for a red color 903R has two polarization parts for transmitting S-polarized red light and a liquid crystal part for modulating S-polarized red light which is sandwiched between the two polarization parts. Therefore, the S-polarized red light incident on the transmission-type liquid crystal display element for a red color 903R is modulated into S-polarized red image light by the transmission-type liquid crystal display element for a red color 903R. The S-polarized red image light emitted from the transmission-type liquid crystal display element for a red color 903R is incident on the half-wave plate for a red color 905R and is converted into P-polarized red image light. Then, the P-polarized red image light is incident on the optical combining element 904.

The P-polarized blue image light, the P-polarized green image light and the P-polarized red image light are combined in the optical combining element 904 and are emitted toward the projection lens 906 as predetermined p-polarized image light. The predetermined p-polarized image light is magnified by the projection lens 906 and is projected onto the screen 912.

Herein, the half-wave plate for a blue color 905B, the half-wave plate for a green color 905G and the half-wave plate for a red color 905R are optical elements according to the first embodiment of the present invention or the second embodiment of the present invention, a phase difference of (1/2) × 2π can be provided between P-polarized light and S-polarized light over a wider range of light wavelength in wavelength ranges of a blue color, a green color and a red color, respectively, wherein the S-polarized light can be converted into the P-polarized light. Thus, since the P-polarized light can be utilized over a wider range of light wavelength in wavelength ranges of a blue color, a green color and a red color, the image projecting apparatus 901 can display an image with a high brightness on the screen 912.

Furthermore, in the image projecting apparatus 901, (ideally) all of non-polarized white light generated from a light source is converted into S-polarized white light by using the polarization converting element 913 and S-polarized blue, green and red light are incident on the transmission-type liquid crystal display elements for a blue color, a green color and a red color 903B, 903G and 903R, respectively. Herein, since the S-polarized blue, green and red light can pass through the polarization parts of each of the transmission-type liquid crystal display elements for a blue color, a green color and a red color 903B, 903G and 903R, most (ideally, all) of the light (converted S-polarized light) generated from a light source can be projected onto the screen 912. Therefore, the image projecting apparatus 901 can display an image with a further higher brightness on the screen 912.

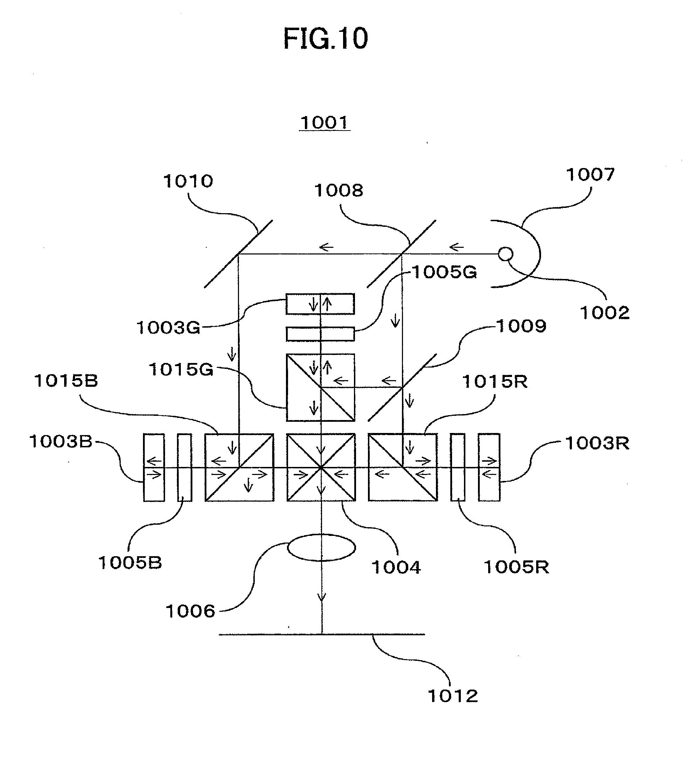

FIG. 10 is a diagram showing a third example of the image projecting apparatus according to the third embodiment of the present invention. The third example of the image projecting apparatus according to the third embodiment of the present invention shown in FIG. 10 is a reflection-type image projecting apparatus.

A reflection-type image projecting apparatus 1001 mainly includes a light source 1002 such as a high pressure mercury lamp, reflection-type liquid crystal display elements for a blue color, a green color and a red color 1003B, 1003G and 1003R for separately form images corresponding to a blue color, a green color, and a red color, respectively, an optical combining element 1004 (which is also referred to as a cross prism or an X cube) for combining blue image light, green image light and red image light which are emitted from three transmission-type liquid crystal display elements 1003B, 1003G and 1003R, quarter-wave plates 1005B, 1005G and 1005R for three wavelengths as the optical elements according to the first embodiment of the present invention or the second embodiment of the present invention, each of which is arranged between each of the three reflection-type liquid crystal display elements 1003B, 1003G and 1003R and the optical combining element 1004, polarization beam splitters for a blue color, a green color and a red color 1015Bm 1015G and 1015R for reflecting blue light, green light and red light which are emitted from the light source to the three reflection-type liquid crystal display elements 1003B, 1003G and 1003R, respectively, and transmitting blue image light, green image light and red image light which are reflected from the three reflection-type liquid crystal display elements 1003B, 1003G and 1003R, respectively, and a projection lens 1006 for magnifying image light combined by the optical combining element 1004 and projecting it onto a screen 1012 as a display surface. Herein, the quarter-wave plates 1005B, 1005G and 1005R for three wavelengths may be a quarter-wave plate for a blue color, a quarter-wave plate for a green color, and a quarter-wave plate for a red color, respectively, or all of them may be single-kind of wave plates for visible light. In addition, the reflection-type image projecting apparatus 1001 includes a reflector 1007 for reflecting a portion of light generated from the light source 1002, a first color-separating dichroic mirror 1008 for separating blue light and green and red light, a second color-separating dichroic mirror 1009 for separating green light and red light, and a total reflection mirror 1010.

A portion of non-polarized white light (including P-polarized light and S-polarized light) generated from the light source 1002 is directly incident on the first color-separating dichroic mirror 1008 and another portion of the non-polarized white light generated from the light source 1002 is reflected from the reflector 1007 and is incident on the first color-separating dichroic mirror 1008.

Non-polarized blue light included in the non-polarized white light incident on the first color-separating dichroic mirror 1008 is transmitted through the first color-separating dichroic mirror 1008, is reflected from the total reflection mirror 1010, and is incident on the polarization beam splitter for a blue color 1015B. Only S-polarized blue light in non-polarized blue light including P-polarized light and S-polarized light which is incident on the polarization beam splitter for a blue color 1015B is reflected toward the quarter-wave plate for a blue color 1005B by the polarization beam splitter for a blue color 1015B. The S-polarized blue light reflected from the polarization beam splitter for a blue color 1015B is converted into right-handed circularly-polarized blue light by the quarter-wave plate for a blue color 1005B and the right-handed circularly-polarized blue light is emitted toward the reflection-type liquid crystal display element for a blue color 1003B. The right-handed circularly-polarized blue light incident on the reflection-type liquid crystal display element for a blue color 1003B is modulated into blue image light by the reflection-type liquid crystal display element for a blue color 1003B and is reflected from the reflection-type liquid crystal display element for a blue color 1003B as left-handed circularly-polarized blue image light. The left-handed circularly-polarized blue image light reflected from the reflection-type liquid crystal display element for a blue color 1003B passes through the quarter-wave plate for a blue color 1005B, again. At this time, the left-handed circularly-polarized blue image light is converted into P-polarized blue image light by the quarter-wave plate for a blue color 1005B. The P-polarized blue image light passing through the quarter-wave plate for a blue color 1005B is transmitted through the polarization beam splitter for a blue color 1015B and is incident on the optical combining element 1004.

On the other hand, non-polarized green light and non-polarized red light which are included in the non-polarized white light incident on the first color-separating dichroic mirror 1008 are reflected from the first color-separating dichroic mirror 1008 and is incident on the second color-separating dichroic mirror 1009. The non-polarized green light incident on the second color-separating dichroic mirror 1009 is reflected from the second color-separating dichroic mirror 1009 and is incident on the polarization beam splitter for a green color 1015G. Only S-polarized green light in non-polarized green light including P-polarized light and S-polarized light which is incident on the polarization beam splitter for a green color 1015G is reflected toward the quarter-wave plate for a green color 1005G by the polarization beam splitter for a green color 1015G. The S-polarized green light reflected from the polarization beam splitter for a green color 1015G is converted into right-handed circularly-polarized green light by the quarter-wave plate for a green color 1005G and the right-handed circularly-polarized green light is emitted toward the reflection-type liquid crystal display element for a green color 1003G. The right-handed circularly-polarized green light incident on the reflection-type liquid crystal display element for a green color 1003B is modulated into green image light by the reflection-type liquid crystal display element for a green color 1003G and is reflected from the reflection-type liquid crystal display element for a green color 1003G as left-handed circularly-polarized green image light. The left-handed circularly-polarized green image light reflected from the reflection-type liquid crystal display element for a green color 1003G passes through the quarter-wave plate for a green color 1005G, again. At this time, the left-handed circularly-polarized green image light is converted into P-polarized green image light by the quarter-wave plate for a green color 1005G. The P-polarized green image light passing through the quarter-wave plate for a green color 1005G is transmitted through the polarization beam splitter for a green color 1015G and is incident on the optical combining element 1004.

Also, non-polarized red light incident on the second color-separating dichroic mirror 1009 is transmitted through the second color-separating dichroic mirror 1009 and is incident on the polarization beam splitter for a red color 1015R. Only S-polarized red light in non-polarized red light including P-polarized light and S-polarized light which is incident on the polarization beam splitter for a red color 1015R is reflected toward the quarter-wave plate for a red color 1005R by the polarization beam splitter for a red color 1015R. The S-polarized red light reflected from the polarization beam splitter for a red color 1015R is converted into right-handed circularly-polarized red light by the quarter-wave plate for a red color 1005R and the right-handed circularly-polarized red light is emitted toward the reflection-type liquid crystal display element for a red color 1003R. The right-handed circularly-polarized red light incident on the reflection-type liquid crystal display element for a red color 1003R is modulated into red image light by the reflection-type liquid crystal display element for a red color 1003R and is reflected from the reflection-type liquid crystal display element for a red color 1003R as left-handed circularly-polarized red image light. The left-handed circularly-polarized green image light reflected from the reflection-type liquid crystal display element for a red color 1003R passes through the quarter-wave plate for a red color 1005R, again. At this time, the left-handed circularly-polarized red image light is converted into P-polarized red image light by the quarter-wave plate for a red color 1005R. The P-polarized red image light passing through the quarter-wave plate for a red color 1005R is transmitted through the polarization beam splitter for a red color 1015B and is incident on the optical combining element 1004.

The P-polarized blue image light, the P-polarized green image light and the P-polarized red image light are combined in the optical combining element 1004 and are emitted toward the projection lens 1006 as predetermined p-polarized image light. The predetermined p-polarized image light is magnified by the projection lens 1006 and is projected onto the screen 1012.

Herein, the quarter-wave plate for a blue color 1005B, the quarter-wave plate for a green color 1005G and the quarter-wave plate for a red color 1005R are optical elements according to the first embodiment of the present invention or the second embodiment of the present invention, a phase difference of (1/4) × 2π can be provided between P-polarized light and S-polarized light over a wider range of light wavelength in wavelength ranges of a blue color, a green color and a red color, respectively, wherein the S-polarized light can be converted into the right-handed circularly-polarized light and the left-handed circularly-polarized light can be converted into the P-polarized light. Thus, since the P-polarized light can be utilized over a wider range of light wavelength in wavelength ranges of a blue color, a green color and a red color, the image projecting apparatus 1001 can display an image with a higher brightness on the screen 1012.

### (Practical example 1)

As a first practical example of the present invention, a half-wave plate for a blue color which was an optical element as shown in FIG. 4 was designed. That is, a half-wave plate was designed which provided a phase difference of 0.5 (± 0.7 %) × 2π between P-polarized light and S-polarized light over a wavelength range of 420 nm or greater and 520 nm or less.

The half-wave plate designed in the first practical example of the present invention is an optical element as shown in FIG. 4, which included a first fine periodic structure including plural first dielectric plates with a first thickness and a first refractive index which were periodically arranged in a first fine period and a second fine periodic structure including plural second dielectric plates with a second thickness and a second refractive index which were periodically arranged in a second fine period. A medium between the plural first dielectric plates and a medium between the plural second dielectric plates were air. In the first practical example of the present invention, the dielectric material constituting the first dielectric plate, the first fine period, the first thickness, the first depth and the first refractive index (refractive index for d line) were glass (SiO₂), 300 nm, 95 nm, 2,975 nm and 1.47, respectively, and the dielectric material constituting the second dielectric plate, the second fine period, the second thickness, the second depth and the second refractive index (refractive index for d line) were titanium oxide (TiO₂), 230 nm, 70 nm, 280 nm and 2.17, respectively. The half-wave plate which was designed in the first practical example of the present invention was made of an inorganic material such as glass and titanium oxide and has a comparatively high heat resistance.

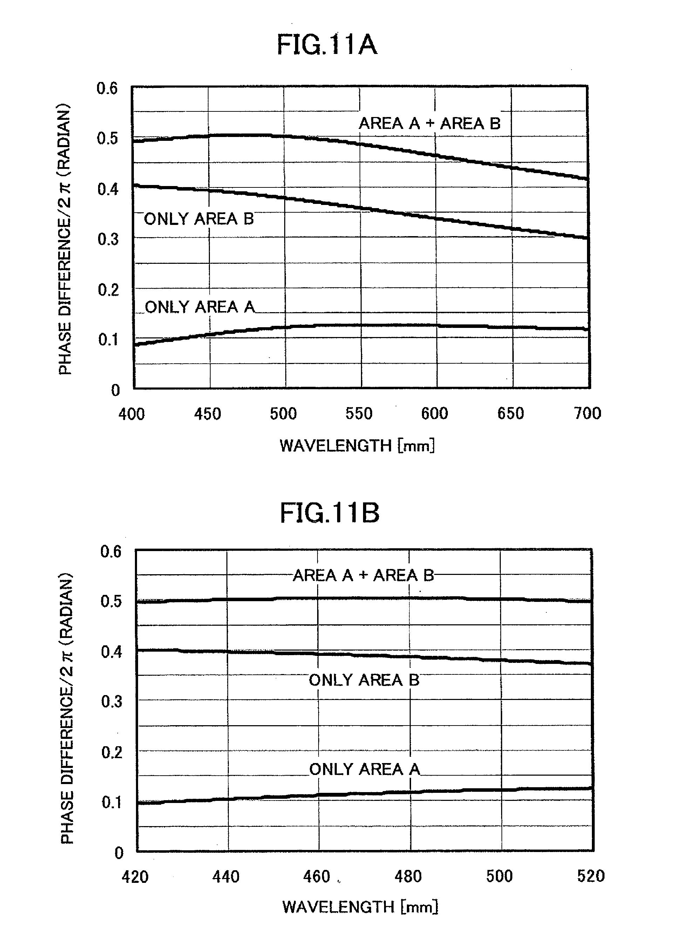

FIG. 11 is a diagram showing the wavelength dependence of a phase difference provided by a half-wave plate designed in the first practical example of the present invention. FIG. 11A is a diagram showing the wavelength dependence of a phase difference provided by a half-wave plate designed in the first practical example of the present invention, over a wavelength range of 400 nm or greater and 700 nm or less. FIG. 11B is a diagram showing the wavelength dependence of a phase difference provided by a half-wave plate designed in the first practical example of the present invention, over a wavelength range (blue) of 420 nm or greater and 520 nm or less. In FIG. 11A or 11B, the horizontal axis represents the wavelength of light (nm) and the vertical axis represents a phase difference / 2π (radian) provided by the half-wave plate. Also, only area A represents the first fine periodic structure described above, only area B represents the second fine periodic structure described above, and area A + area B represents the whole of an optical element having both the first fine periodic structure described above and the second fine periodic structure described above.

As shown in FIG. 11A and FIG. 11B, in the half-wave plate designed in the first practical example of the present invention, the first fine periodic structure (only area A) provided a phase difference increasing with the increase of a wavelength and the second fine periodic structure (only area B) provided a phase difference decreasing with the increase of a wavelength, with respect to light with a wavelength in a wavelength range (blue) of 420 nm or greater and 520 nm or less. Therefore, there was provided the sum of a phase difference increasing with the increase of a wavelength which was provided by the first fine periodic structure and a phase difference decreasing with the increase of a wavelength which was provided by the second fine periodic structure, with respect to light with a wavelength in a wavelength range (blue) of 420 nm or greater and 520 nm or less. Accordingly, the half-wave plate designed in the first practical example of the present invention could provide a generally constant phase difference of (1/2) × 2π (± 0.7 %) between P-polarized light and S-polarized light, with respect to light with a wavelength in a wavelength range (blue) of 420 nm or greater and 520 nm or less. That is, the half-wave plate designed in the first practical example of the present invention was a half-wave plate for providing a phase difference of (1/2) × 2π with a very high precision, with respect to light with a wavelength in a wavelength range (blue) of 420 nm or greater and 520 nm or less.

Additionally, a quarter-wave plate for providing a phase difference of (1/4) × 2π with a very high precision could be designed with respect to light with a wavelength in a wavelength range (blue) of 420 nm or greater and 520 nm or less, by reducing each of the first depth described above and the second depth described above in the half-wave plate designed in the first practical example of the present invention to half.

### (Practical example 2)

As a second practical example of the present invention, a half-wave plate for a green color which was an optical element as shown in FIG. 5 was designed. That is, a half-wave plate was designed which provided a phase difference of 0.5 (± 0.7 %) × 2π between P-polarized light and S-polarized light over a wavelength range of 520 nm or greater and 620 nm or less.

The half-wave plate designed in the second practical example of the present invention is an optical element as shown in FIG. 5, which included a first fine periodic structure including plural first dielectric plates with a first thickness and a first refractive index which were periodically arranged in a first fine period and a second fine periodic structure including plural second dielectric plates with a second thickness and a second refractive index which were periodically arranged in a second fine period. The dielectric material of the first dielectric plate and the dielectric material of the second dielectric plate were common and the first refractive index and the second refractive index were identical. Additionally, a medium between the plural first dielectric plates and a medium between the plural second dielectric plates were air. In the second practical example of the present invention, the dielectric material constituting the first dielectric plate, the first fine period, the first thickness, the first depth and the first refractive index (refractive index for d line) were glass (SiO₂), 360 nm, 115 nm, 2,035 nm and 1.47, respectively, and the dielectric material constituting the second dielectric plate, the second fine period, the second thickness, the second depth and the second refractive index (refractive index for d line) were glass (SiO₂), 450 nm, 115 nm, 3,770 nm and 1.47, respectively. The half-wave plate which was designed in the second practical example of the present invention was made of an inorganic material such as glass and has a comparatively high heat resistance.

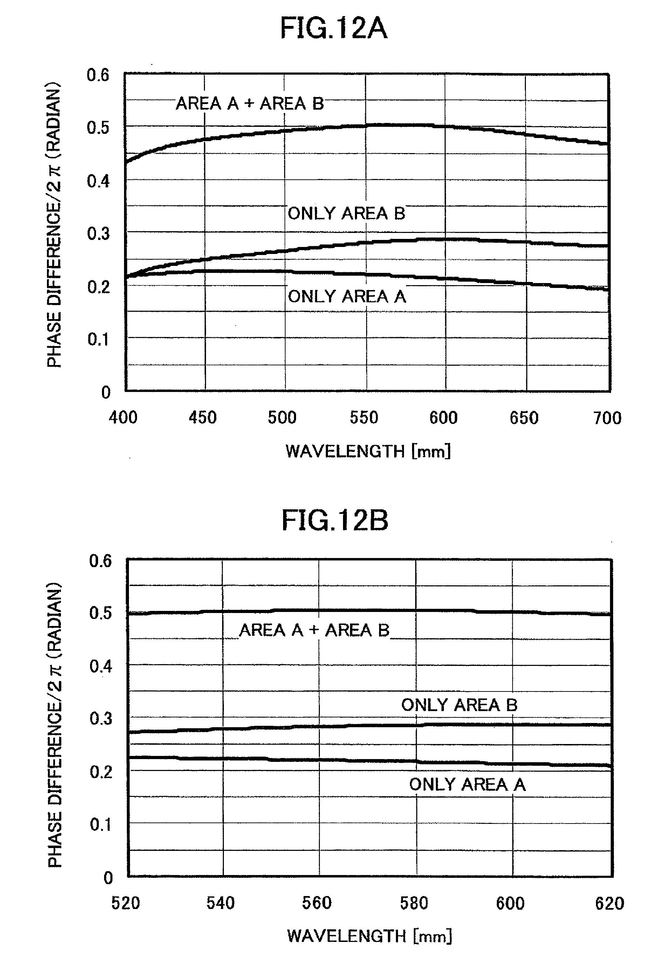

FIG. 12 is a diagram showing the wavelength dependence of a phase difference provided by a half-wave plate designed in the second practical example of the present invention. FIG. 12A is a diagram showing the wavelength dependence of a phase difference provided by a half-wave plate designed in the second practical example of the present invention, over a wavelength range of 400 nm or greater and 700 nm or less. FIG. 12B is a diagram showing the wavelength dependence of a phase difference provided by a half-wave plate designed in the second practical example of the present invention, over a wavelength range (green) of 520 nm or greater and 620 nm or less. In FIG. 12A or 12B, the horizontal axis represents the wavelength of light (nm) and the vertical axis represents a phase difference / 2π (radian) provided by the half-wave plate. Also, only area A represents the first fine periodic structure described above, only area B represents the second fine periodic structure described above, and area A + area B represents the whole of an optical element having both the first fine periodic structure described above and the second fine periodic structure described above.

As shown in FIG. 12A and FIG. 12B, in the half-wave plate designed in the second practical example of the present invention, the first fine periodic structure (only area A) provided a phase difference decreasing with the increase of a wavelength and the second fine periodic structure (only area B) provided a phase difference increasing with the increase of a wavelength, with respect to light with a wavelength in a wavelength range (green) of 520 nm or greater and 620 nm or less. Therefore, there was provided the sum of a phase difference decreasing with the increase of a wavelength which was provided by the first fine periodic structure and a phase difference increasing with the increase of a wavelength which was provided by the second fine periodic structure, with respect to light with a wavelength in a wavelength range (green) of 520 nm or greater and 620 nm or less. Accordingly, the half-wave plate designed in the second practical example of the present invention could provide a generally constant phase difference of (1/2) × 2π (± 0.7 %) between P-polarized light and S-polarized light, with respect to light with a wavelength in a wavelength range (green) of 520 nm or greater and 620 nm or less. That is, the half-wave plate designed in the second practical example of the present invention was a half-wave plate for providing a phase difference of (1/2) × 2π with a very high precision, with respect to light with a wavelength in a wavelength range (green) of 520 nm or greater and 620 nm or less.

Additionally, a quarter-wave plate for providing a phase difference of (1/4) × 2π with a very high precision could be designed with respect to light with a wavelength in a wavelength range (green) of 520 nm or greater and 620 nm or less, by reducing each of the first depth described above and the second depth described above in the half-wave plate designed in the second practical example of the present invention to half.

### (Practical example 3)

As a third practical example of the present invention, a half-wave plate for a red color which was an optical element as shown in FIG. 4 was designed. That is, a half-wave plate was designed which provided a phase difference of 0.5 (± 0.3 %) × 2π between P-polarized light and S-polarized light over a wavelength range of 620 nm or greater and 700 nm or less.

The half-wave plate designed in the third practical example of the present invention is an optical element as shown in FIG. 4, which included a first fine periodic structure including plural first dielectric plates with a first thickness and a first refractive index which were periodically arranged in a first fine period and a second fine periodic structure including plural second dielectric plates with a second thickness and a second refractive index which were periodically arranged in a second fine period. A medium between the plural first dielectric plates and a medium between the plural second dielectric plates were air. In the third practical example of the present invention, the dielectric material constituting the first dielectric plate, the first fine period, the first thickness, the first depth and the first refractive index (refractive index for d line) were glass (SiO₂), 300 nm, 90 nm, 2,230 nm and 1.47, respectively, and the dielectric material constituting the second dielectric plate, the second fine period, the second thickness, the second depth and the second refractive index (refractive index for d line) were titanium oxide (TiO₂), 300 nm, 90 nm, 835 nm and 2.17, respectively. The half-wave plate which was designed in the third practical example of the present invention was made of an inorganic material such as glass and titanium oxide and has a comparatively high heat resistance.

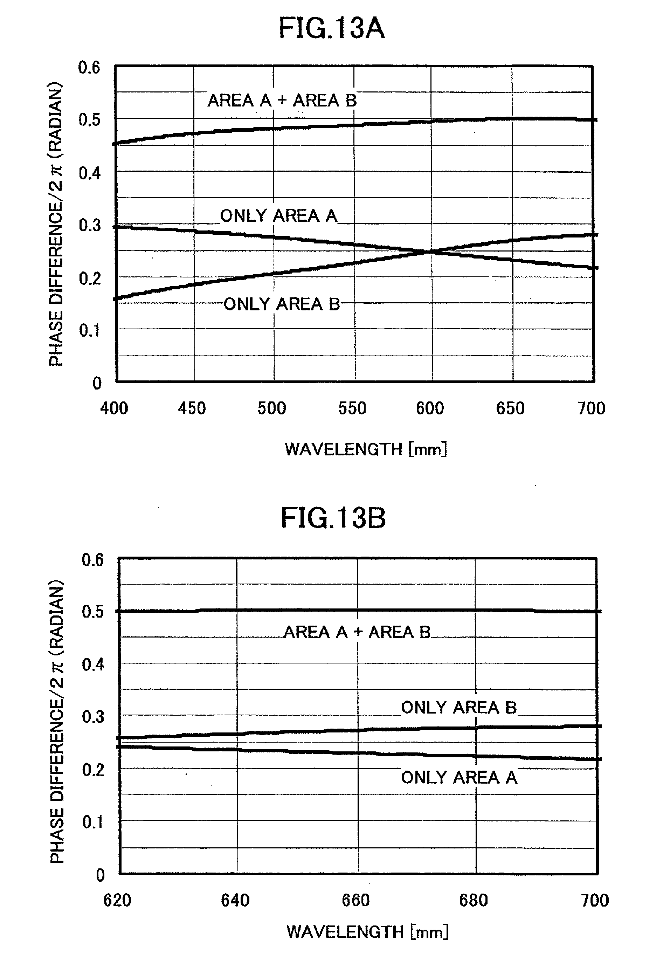

FIG. 13 is a diagram showing the wavelength dependence of a phase difference provided by a half-wave plate designed in the third practical example of the present invention. FIG. 13A is a diagram showing the wavelength dependence of a phase difference provided by a half-wave plate designed in the third practical example of the present invention, over a wavelength range of 400 nm or greater and 700 nm or less. FIG. 13B is a diagram showing the wavelength dependence of a phase difference provided by a half-wave plate designed in the third practical example of the present invention, over a wavelength range (red) of 620 nm or greater and 700 nm or less. In FIG. 13A or 13B, the horizontal axis represents the wavelength of light (nm) and the vertical axis represents a phase difference / 2π (radian) provided by the half-wave plate. Also, only area A represents the first fine periodic structure described above, only area B represents the second fine periodic structure described above, and area A + area B represents the whole of an optical element having both the first fine periodic structure described above and the second fine periodic structure described above.

As shown in FIG. 13A and FIG. 13B, in the half-wave plate designed in the third practical example of the present invention, the first fine periodic structure (only area A) provided a phase difference decreasing with the increase of a wavelength and the second fine periodic structure (only area B) provided a phase difference increasing with the increase of a wavelength, with respect to light with a wavelength in a wavelength range (red) of 620 nm or greater and 700 nm or less. Therefore, there was provided the sum of a phase difference decreasing with the increase of a wavelength which was provided by the first fine periodic structure and a phase difference increasing with the increase of a wavelength which was provided by the second fine periodic structure, with respect to light with a wavelength in a wavelength range (red) of 620 nm or greater and 700 nm or less. Accordingly, the half-wave plate designed in the third practical example of the present invention could provide a generally constant phase difference of (1/2) × 2π (± 0.3 %) between P-polarized light and S-polarized light, with respect to light with a wavelength in a wavelength range (red) of 620 nm or greater and 700 nm or less. That is, the half-wave plate designed in the third practical example of the present invention was a half-wave plate for providing a phase difference of (1/2) × 2π with a very high precision, with respect to light with a wavelength in a wavelength range (red) of 620 nm or greater and 700 nm or less.

Additionally, a quarter-wave plate for providing a phase difference of (1/4) × 2π with a very high precision could be designed with respect to light with a wavelength in a wavelength range (red) of 620 nm or greater and 700 nm or less, by reducing each of the first depth described above and the second depth described above in the half-wave plate designed in the third practical example of the present invention to half.

### (Practical example 4)

As a fourth practical example of the present invention, a half-wave plate for visible light which was an optical element as shown in FIG. 3 was designed. That is, a half-wave plate was designed which provided a phase difference of 0.5 (± 2.1 %) × 2π between P-polarized light and S-polarized light over a wavelength range of 420 nm or greater and 700 nm or less.

The half-wave plate designed in the fourth practical example of the present invention is an optical element as shown in FIG. 3, which included a first fine periodic structure including plural first dielectric plates with a first thickness and a first refractive index which were periodically arranged in a first fine period and a second fine periodic structure including plural second dielectric plates with a second thickness and a second refractive index which were periodically arranged in a second fine period. Also, the half-wave plate designed in the fourth practical example of the present invention included a substrate provided between the first fine periodic structure and the second fine periodic structure. Additionally, a medium between the plural first dielectric plates and a medium between the plural second dielectric plates were air. In the fourth practical example of the present invention, the dielectric material constituting the first dielectric plate, the first fine period, the first thickness, the first depth and the first refractive index (refractive index for d line) were titanium oxide (TiO₂), 200 nm, 120 nm, 247 nm and 2.17, respectively, and the dielectric material constituting the second dielectric plate, the second fine period, the second thickness, the second depth and the second refractive index (refractive index for d line) were titanium oxide (TiO₂), 300 nm, 90 nm, 1,124 nm and 2.17, respectively. Furthermore, the material of the substrate was glass (SiO₂) and the refractive index (refractive index for d line) of the substrate was 1.47. The half-wave plate which was designed in the fourth practical example of the present invention was made of an inorganic material such as glass and titanium oxide and has a comparatively high heat resistance.

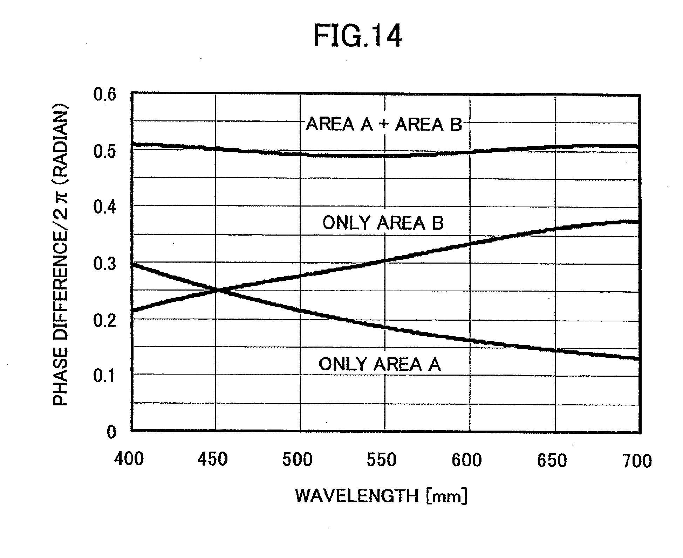

FIG. 14 is a diagram showing the wavelength dependence of a phase difference provided by a half-wave plate designed in the fourth practical example of the present invention. More particularly, FIG. 14 shows the wavelength dependence of a phase difference provided by a half-wave plate designed in the fourth practical example of the present invention, over a wavelength range of 400 nm or greater and 700 nm or less. In FIG. 14, the horizontal axis represents the wavelength of light (nm) and the vertical axis represents a phase difference / 2π (radian) provided by the half-wave plate. Also, only area A represents the first fine periodic structure described above, only area B represents the second fine periodic structure described above, and area A + area B represents the whole of an optical element having both the first fine periodic structure described above and the second fine periodic structure described above.

As shown in FIG. 14, in the half-wave plate designed in the fourth practical example of the present invention, the first fine periodic structure (only area A) provided a phase difference decreasing with the increase of a wavelength and the second fine periodic structure (only area B) provided a phase difference increasing with the increase of a wavelength, with respect to light with a wavelength in a wavelength range (visible light) of 420 nm or greater and 700 nm or less. Therefore, there was provided the sum of a phase difference decreasing with the increase of a wavelength which was provided by the first fine periodic structure and a phase difference increasing with the increase of a wavelength which was provided by the second fine periodic structure, with respect to light with a wavelength in a wavelength range (visible light) of 420 nm or greater and 700 nm or less. Accordingly, the half-wave plate designed in the fourth practical example of the present invention could provide a generally constant phase difference of (1/2) × 2π (± 2.1 %) between P-polarized light and S-polarized light, with respect to light with a wavelength in a wavelength range (visible light) of 420 nm or greater and 700 nm or less. That is, the half-wave plate designed in the fourth practical example of the present invention was a half-wave plate for providing a phase difference of (1/2) × 2π with a very high precision, with respect to light with a wavelength in a wavelength range (visible light) of 420 nm or greater and 700 nm or less.

Additionally, a quarter-wave plate for providing a phase difference of (1/4) × 2π with a very high precision could be designed with respect to light with a wavelength in a wavelength range (visible light) of 420 nm or greater and 700 nm or less, by reducing each of the first depth described above and the second depth described above in the half-wave plate designed in the fourth practical example of the present invention to half.

Although the embodiments and practical examples of the present invention have been specifically described above, the present invention is not limited to the embodiments or practical examples and the embodiments or practical examples may be varied or modified.

## Claims

1. An optical element with a phase structure configured to provide a phase difference between a first polarization component of light and a second polarization component of the light which is orthogonal to the first polarization component,
wherein the phase structure comprises a first phase structure (33; 43; 53) configured to provide a maximum phase difference to light with a first wavelength and a second phase structure (35; 45; 55) configured to provide a maximum phase difference to light with a second wavelength which is different from the first wavelength,
wherein the first and second phase structures are arranged such that incident light passing through the first phase structure and the second phase structure is provided with a phase difference corresponding to the sum of the phase differences provided by the first phase structure and by the second phase structure,
wherein the wavelength dependencies provided by the first and second phase structures are designed such as to provide a constant sum in a predetermined wavelength range between the first wavelength and the second wavelength,
wherein the first phase structure comprises a first periodic structure and the second phase structure comprises a second periodic structure wherein the periods of the first periodic structure and of the second periodic structure differ from each other.

2. The optical element as claimed in claim 1, **characterized in that** a phase difference provided to light with a third wavelength between the first wavelength and the second wavelength, a phase difference provided to light with a fourth wavelength between the first wavelength and the second wavelength and different from the third wavelength, and a phase difference provided to light with a fifth wavelength between the third wavelength and the fourth wavelength are substantially equal.

3. The optical element as claimed in claim 2, **characterized by** providing a phase difference which is substantially constant to light with an arbitrary wavelength between the third wavelength and the fourth wavelength.

4. The optical element as claimed in claim 2 or 3, **characterized in that** the third wavelength and the fourth wavelength are 420 nm and 520 nm, respectively.

5. The optical element as claimed in claim 2 or 3, **characterized in that** the third wavelength and the fourth wavelength are 520 nm and 620 nm, respectively.

6. The optical element as claimed in claim 2 or 3, **characterized in that** the third wavelength and the fourth wavelength are 620 nm and 700 nm, respectively.

7. The optical element as claimed in claim 2 or 3, **characterized in that** the third wavelength and the fourth wavelength are 420 nm and 700 nm, respectively.

8. The optical element according to any one of claims 1 to 7 wherein the first phase structure comprises a first fine periodic structure which comprises plural first dielectric plates with a first width and a first refractive index which are periodically arranged in the first fine period and a second fine periodic structure which comprises plural second dielectric plates with a second width and a second refractive index which are periodically arranged in the second fine period, such that the first fine periodic structure and the second fine periodic structure face each other, wherein a refractive index of a medium between the plural first dielectric plates and a refractive index of a medium between the plural second dielectric plates are different from the first refractive index and the second refractive index.

9. The optical element according to claim 8, wherein at least one of, a ratio of the first width to the first fine period and a ratio of the second width to the second fine period, and the first refractive index and the second refractive index, is different from each other.

10. The optical element as claimed in any one of claims 8 to 9, **characterized in that** the first refractive index and the second refractive index are identical to each other.

11. The optical element as claimed in any one of claims 8 to 9, **characterized in that** the first refractive index and the second refractive index are different from each other.

12. The optical element as claimed in any of claims 8 to 11, **characterized in that** at least one of a material of the first fine periodic structure and a material of the second fine periodic structure is an inorganic material.

13. The optical element as claimed in any of claims 8 to 12, **characterized by** further comprising a substrate provided between the first fine periodic structure and the second fine periodic structure.

14. The optical element as claimed in claim 13, **characterized in that** a material of the substrate is an inorganic material.

15. The optical element as claimed in any of claims 1 to 14, **characterized in that** the phase difference is substantially (1/4) x 2π.

16. The optical element as claimed in any of claims 1 to 14, **characterized in that** the phase difference is substantially (1/2) x 2π.

17. The optical element as claimed in any of claims 1 to 16, **characterized by** further comprising a polarized light separating structure configured to separate the first polarization component and the second polarization component.

18. An image projecting apparatus configured to project an image on a display surface on which an image is displayed, **characterized by** comprising the optical element as claimed in any of claims 1 to 17.

## Patentansprüche

1. Optisches Element mit einer Phasenstruktur, die konfiguriert ist, um eine Phasendifferenz zwischen einer ersten Polarisationskomponente von Licht und einer zweiten Polarisationskomponente von dem Licht, welches orthogonal zu der ersten Polarisationskomponente ist, bereitzustellen,
wobei die Phasenstruktur die erste Phasenstruktur (33; 43; 53), die konfiguriert ist, um eine maximale Phasendifferenz zu dem Licht mit einer ersten Wellenlänge bereitzustellen und eine zweite Phasenstruktur (35; 45; 55) aufweist, die konfiguriert ist, um eine maximale Phasendifferenz zu dem Licht mit einer zweiten Wellenlänge bereitzustellen, welche unterschiedlich von der ersten Wellenlänge ist,
wobei die erste und zweite Phasenstruktur derart angeordnet sind, dass einfallendes Licht durch die erste Phasenstruktur hindurchgelangt bzw. diese passiert, und die zweite Phasenstruktur mit einer Phasendifferenz bereitgestellt ist, die zu der Summe der Phasendifferenzen korrespondiert, die durch die erste Phasenstruktur und die zweite Phasenstruktur bereitgestellt sind,
wobei die Wellenlängenabhängigkeiten, die durch die erste und zweite Phasenstruktur bereitgestellt sind, entworfen bzw. entwickelt oder ausgebildet sind, um eine konstante Summe in einem vorbestimmten Wellenlängenbereich zwischen der ersten Wellenlänge und der zweiten Wellenlänge bereitzustellen,
wobei die erste Phasenstruktur eine erste periodische Struktur aufweist und die zweite Phasenstruktur eine zweite periodische Struktur aufweist, wobei die Perioden der ersten periodischen Struktur und der zweiten periodischen Struktur voneinander unterschiedlich sind bzw. sich voneinander unterscheiden.

2. Optisches Element nach Anspruch 1, **dadurch gekennzeichnet, dass** eine Phasendifferenz, die zu dem Licht mit einer dritten Wellenlänge zwischen der ersten Wellenlänge und der zweiten Wellenlänge bereitgestellt ist, eine Phasendifferenz, die zu dem Licht mit einer vierten Wellenlänge zwischen der ersten Wellenlänge und der zweiten Wellenlänge und unterschiedlich von der dritten Wellenlänge bereitgestellt ist, und eine Phasendifferenz, die zu dem Licht mit einer fünften Wellenlänge zwischen der dritten Wellenlänge und der vierten Wellenlänge bereitgestellt ist, im Wesentlichen gleich sind.

3. Optisches Element nach Anspruch 2, **gekennzeichnet durch** das Bereitstellen einer Phasendifferenz, welche im Wesentlichen konstant zu dem Licht mit einer willkürlichen Wellenlänge zwischen der dritten Wellenlänge und der vierten Wellenlänge ist.

4. Optisches Element nach Anspruch 2 oder 3, **dadurch gekennzeichnet, dass** die dritte Wellenlänge und die vierte Wellenlänge 420 nm und 520 nm jeweilig sind.

5. Optisches Element nach Anspruch 2 oder 3, **dadurch gekennzeichnet, dass** die dritte Wellenlänge und die vierte Wellenlänge 520 nm und 620 nm jeweilig sind.

6. Optisches Element nach Anspruch 2 oder 3, **dadurch gekennzeichnet, dass** die dritte Wellenlänge und die vierte Wellenlänge 620 nm und 700 nm jeweilig sind.

7. Optisches Element nach Anspruch 2 oder 3, **dadurch gekennzeichnet, dass** die dritte Wellenlänge und die vierte Wellenlänge 420 nm und 720 nm jeweilig sind.

8. Optisches Element nach irgendeinem der Ansprüche 1 bis 7, wobei die erste Phasenstruktur eine erste feine bzw. dünne periodische Struktur aufweist, welche eine Vielzahl von ersten dielektrischen Platten mit einer ersten Breite und einem ersten Brechungsindex aufweist, welche periodisch in bzw. bei der ersten feinen bzw. dünnen Periode angeordnet sind, und eine zweite feine bzw. dünne periodische Struktur aufweist, welche eine Vielzahl von zweiten dielektrischen Platten mit einer zweiten Breiten und einem zweiten Brechungsindex aufweist, welche periodisch in bzw. bei der zweiten feinen bzw. dünnen Periode angeordnet sind, und zwar derart, dass die erste feine bzw. dünne periodische Struktur und die zweite feine bzw. dünne periodische Struktur einander gegenüberliegen, wobei ein Brechungsindex von einem Medium zwischen der Vielzahl von ersten dielektrischen Platten und einem Brechungsindex von einem Medium zwischen der Vielzahl von zweiten dielektrischen Platten unterschiedlich von dem ersten Brechungsindex und dem zweiten Brechungsindex ist.

9. Optisches Element nach Anspruch 8, wobei zumindest eines von einem Verhältnis der ersten Breite zu der ersten feinen bzw. dünnen Periode und einem Verhältnis der zweiten Breite zu der zweiten feinen bzw. dünnen Periode, und der erste Brechungsindex und der zweite Brechungsindex voneinander unterschiedlich sind.

10. Optisches Element nach irgendeinem der Ansprüche 8 bis 9, **dadurch gekennzeichnet, dass** der erste Brechungsindex und der zweite Brechungsindex zueinander identisch sind.

11. Optisches Element nach irgendeinem der Ansprüche 8 bis 9, **dadurch gekennzeichnet, dass** der erste Brechungsindex und der zweite Brechungsindex voneinander unterschiedlich sind.

12. Optisches Element nach irgendeinem der Ansprüche 8 bis 11, **dadurch gekennzeichnet, dass** zumindest eines von einem Material von der ersten feinen bzw. dünnen periodischen Struktur und einem Material der zweiten feinen periodischen Struktur ein anorganisches Material ist.

13. Optisches Element nach irgendeinem der Ansprüche 8 bis 12, **gekennzeichnet durch** das weitere Aufweisen eines Substrats, das zwischen der erst feinen bzw. dünnen periodischen Struktur und der zweiten feinen bzw. dünnen periodischen Struktur bereitgestellt ist.

14. Optisches Element nach Anspruch 13, **dadurch gekennzeichnet, dass** ein Material von dem Substrat ein anorganisches Material ist.

15. Optisches Element nach irgendeinem der Ansprüche 1 bis 14, **dadurch gekennzeichnet, dass** die Phasendifferenz im Wesentlichen (1/4) x 2π ist.

16. Optisches Element nach irgendeinem der Ansprüche 1 bis 14, **dadurch gekennzeichnet, dass** die Phasendifferenz im Wesentlichen (1/2) x 2π ist.

17. Optisches Element nach irgendeinem der Ansprüche 1 bis 16, **gekennzeichnet durch** das weitere Aufweisen einer polarisierten lichtseparierenden Struktur, die konfiguriert ist, um die erste Polarisationskomponente und die zweite Polarisationskomponente zu separieren bzw. zu trennen.

18. Bildprojektionsapparat, der konfiguriert ist, um ein Bild auf eine Anzeigefläche auf welcher ein Bild angezeigt ist, zu projizieren, **gekennzeichnet durch** das Aufweisen des optischen Elementes nach irgendeinem der Ansprüche 1 bis 17.

## Revendications

1. Elément optique avec une structure de phase configurée pour fournir une différence de phase entre une première composante de polarisation de la lumière et une deuxième composante de polarisation de la lumière qui est orthogonale à la première composante de polarisation,
dans lequel la structure de phase comprend une première structure de phase (33 ; 43 ; 53) configurée pour fournir une différence de phase maximum à la lumière avec une première longueur d'onde et une deuxième structure de phase (35 ; 45 ; 55) configurée pour fournir une différence de phase maximum à la lumière avec une deuxième longueur d'onde qui est différente de la première longueur d'onde,
dans lequel les première et deuxième structures de phase sont agencées de sorte qu'une lumière incidente passant à travers la première structure de phase et la deuxième structure de phase reçoive une différence de phase correspondant à la somme des différences de phase fournies par la première structure de phase et par la deuxième structure de phase,
dans lequel les dépendances vis-à-vis de la longueur d'onde fournies par les première et deuxième structures de phase sont conçues de manière à fournir une somme constante dans une plage de longueur d'onde prédéterminée entre la première longueur d'onde et la deuxième longueur d'onde,
dans lequel la première structure de phase comprend une première structure périodique et la deuxième structure de phase comprend une deuxième structure périodique, dans lequel les périodes de la première structure périodique et de la deuxième structure périodique sont différentes l'une de l'autre.

2. Elément optique selon la revendication 1, **caractérisé en ce qu'**une différence de phase fournie à la lumière avec une troisième longueur d'onde entre la première longueur d'onde et la deuxième longueur d'onde, une différence de phase fournie à la lumière avec une quatrième longueur d'onde entre la première longueur d'onde et la deuxième longueur d'onde et différente de la troisième longueur d'onde, et une différence de phase fournie à la lumière avec une cinquième longueur d'onde entre la troisième longueur d'onde et la quatrième longueur d'onde sont sensiblement égales.

3. Elément optique selon la revendication 2, **caractérisé par** la fourniture d'une différence de phase qui est sensiblement constante à la lumière avec une longueur d'onde arbitraire entre la troisième longueur d'onde et la quatrième longueur d'onde.

4. Elément optique selon la revendication 2 ou 3, **caractérisé en ce que** la troisième longueur d'onde et la quatrième longueur d'onde sont respectivement égales à 420 nm et 520 nm.

5. Elément optique selon la revendication 2 ou 3, **caractérisé en ce que** la troisième longueur d'onde et la quatrième longueur d'onde sont respectivement égales à 520 nm et 620 nm.

6. Elément optique selon la revendication 2 ou 3, **caractérisé en ce que** la troisième longueur d'onde et la quatrième longueur d'onde sont respectivement égales à 620 nm et 700 nm.

7. Elément optique selon la revendication 2 ou 3, **caractérisé en ce que** la troisième longueur d'onde et la quatrième longueur d'onde sont respectivement égales à 420 nm et 700 nm.

8. Elément optique selon l'une quelconque des revendications 1 à 7, dans lequel la première structure de phase comprend une première structure périodique fine qui comprend plusieurs premières plaques diélectriques avec une première largeur et un premier indice de réfraction, qui sont agencées périodiquement dans la première période fine, et une deuxième structure périodique fine qui comprend plusieurs deuxièmes plaques diélectriques avec une deuxième largeur et un deuxième indice de réfraction, qui sont agencées périodiquement dans la deuxième période fine, de sorte que la première structure périodique fine et la deuxième structure périodique fine se fassent mutuellement face, dans lequel un indice de réfraction d'un milieu entre la pluralité de premières plaques diélectriques et un indice de réfraction d'un milieu entre la pluralité de deuxièmes plaques diélectriques sont différents du premier indice de réfraction et du deuxième indice de réfraction.

9. Elément optique selon la revendication 8, dans lequel au moins l'un, d'un rapport entre la première largeur et la première période fine et d'un rapport entre la deuxième largeur et la deuxième période fine, et du premier indice de réfraction et du deuxième indice de réfraction, sont différents l'un de l'autre.

10. Elément optique selon l'une quelconque des revendications 8 à 9, **caractérisé en ce que** le premier indice de réfraction et le deuxième indice de réfraction sont identiques l'un à l'autre.

11. Elément optique selon l'une quelconque des revendications 8 à 9, **caractérisé en ce que** le premier indice de réfraction et le deuxième indice de réfraction sont différents l'un de l'autre.

12. Elément optique selon l'une quelconque des revendications 8 à 11, **caractérisé en ce qu'**au moins l'un d'un matériau de la première structure périodique fine et d'un matériau de la deuxième structure périodique fine est un matériau inorganique.

13. Elément optique selon l'une quelconque des revendications 8 à 12, **caractérisé en ce qu'**il comprend en outre un substrat prévu entre la première structure périodique fine et la deuxième structure périodique fine.

14. Elément optique selon la revendication 13, **caractérisé en ce qu'**un matériau du substrat est un matériau inorganique.

15. Elément optique selon l'une quelconque des revendications 1 à 14, **caractérisé en ce que** la différence de phase est sensiblement égale à (1/4) × 2π.

16. Elément optique selon l'une quelconque des revendications 1 à 14, **caractérisé en ce que** la différence de phase est sensiblement égale à (1/2) × 2π.

17. Elément optique selon l'une quelconque des revendications 1 à 16, **caractérisé en ce qu'**il comprend en outre une structure de séparation de lumière polarisée configurée pour séparer la première composante de polarisation et la deuxième composante de polarisation.

18. Appareil de projection d'image configuré pour projeter une image sur une surface d'affichage sur laquelle une image est affichée, **caractérisé en ce qu'**il comprend l'élément optique selon l'une quelconque des revendications 1 à 17.
